# FASCICULE DE BREVET EUROPEEN

(11) **EP 0 742 925 B1**
(45) Date de publication et mention de la délivrance du brevet: **28.04.1999**
(21) Numéro de dépôt: 95907052.5
(22) Date de dépôt: 20.01.1995
(51) Int. Cl.: G06K 19/07, G06K 19/077

(54) **OUTIL INFORMATIQUE DE COMMUNICATION ET DISPOSITIF D'EXPLOITATION**
INFORMATIKWERKZEUG ZUR KOMMUNIKATION UND EINRICHTUNG ZU DESSEN NUTZUNG
DATA COMMUNICATION INSTRUMENT AND OPERATING DEVICE THEREFOR

(30) Priorité: 02.02.1994 FR 9401128
(43) Date de publication de la demande: 20.11.1996
(73) Titulaire: Rouyrre, Olivier, 75009 Paris (FR); Labbe, Patrick, 92100 Boulogne-Billancourt (FR)
(72) Inventeur: Rouyrre, Olivier, 75009 Paris (FR); Labbe, Patrick, 92100 Boulogne-Billancourt (FR)
(74) Mandataire: Desrousseaux, Grégoire Marie
(86) Numéro de dépôt international: FR9500062
(87) Numéro de publication internationale: WO9521421

(56) Documents cités:
- EP-A- 0 057 602
- EP-A- 0 168 836
- EP-A- 0 362 050
- WO-A-81/02070
- FR-A- 2 611 948

## Description

L'invention se rapporte à un outil informatique de communication et à un dispositif d'exploitation de cet outil. L'ensemble permet à la fois une communication directe entre particuliers disposant chacun d'un tel outil et, le cas échéant, une communication entre cet outil et des systèmes informatiques adaptés à des fonctions particulières déterminées.

Les outils informatiques pour échanger des informations entre un particulier et une machine sont bien connus. Ce sont les cartes à puces électroniques qui sont universellement utilisées pour de nombreuses applications, dans le cadre d'une norme internationale (ISO 7810).

La carte bancaire permet à un particulier de retirer de l'argent dans un distributeur de billets de banque ou encore de payer une facture émise par un commerçant disposant d'un appareil d'encaissement électronique, les deux opérations conduisant à un débit différé du compte bancaire du titulaire. La télécarte utilisée dans les publiphones tout comme la carte de paiement à usage plus général annoncée par la presse spécialisée (le porte-monnaie électronique) ou la carte d'accès à une chaîne de télévision à péage sont d'autres exemples de cartes informatiques qui permettent à un particulier de transférer à un créditeur des données fiduciaires pré-achetées, par l'intermédiaire d'une machine. Dans toutes ces applications, la carte à puces concernée comporte le minimum de composants (un micro-contrôleur et un mémoire), étant entendu que le système informatique puissant auquel elle est incorporée pendant la durée de sa mise en oeuvre, lui associe tous les moyens complémentaires (notamment une source d'énergie électrique et des logiciels d'exploitation et d'application adéquats), nécessaires pour mener à son terme l'ensemble des opérations à réaliser.

Ces cartes informatiques de type connu présentent différents inconvénients techniques que l'on a tenté de corriger.

A cet effet, la demande de brevet européen EP 0.168.836 de OKI décrit un outil informatique, du type carte bancaire, comportant une alimentation, un microprocesseur, des mémoires, un clavier à deux touches, un écran d'affichage et un couple émetteur-récepteur de signaux optiques. Un tel outil opère sous le contrôle d'un logiciel de gestion spécifique. Ce qui permet à l'utilisateur de consulter directement le contenu de la carte, sans faire appel au dispositif d'exploitation usuel. Cet outil ne permet pas d'échange de données entre particuliers.

La demande de brevet européen EP 0.362.050 de FUJITSU décrit une carte à mémoire susceptible de communiquer avec plusieurs dispositifs de lecture et d'écriture comportant des bus de données opérant avec des longueurs de mots différentes. A cet effet, cette carte comporte sensiblement les mêmes composants électroniques que la précédente, le tout fonctionnant sous le contrôle d'un logiciel de gestion adéquat. Ce type de carte ne peut bien entendu pas permettre de réaliser des échanges directs de données entre particuliers.

Le brevet européen EP 0.057.602 de CHALMERS décrit une carte informatique standard, susceptible de posséder plusieurs fonctions différentes. Chaque fonction, préalablement programmée, est exécutée lorsque la carte est connectée au système informatique concerné. A cet effet, elle comporte sensiblement les mêmes composants électroniques que les deux cartes précédentes et un logiciel de gestion particulier adapté à commuter les fonctions et à les exécuter. Les organes émetteur et récepteur sont du type inductif. Cette carte ne permet pas l'échange direct de données entre particuliers.

Une solution au problème de transfert de données fiduciaires entre deux particuliers a été proposée dans le brevet français N° 90.05562 qui décrit un dispositif informatique de poche, comportant alimentation, micro-contrôleur programmé, écran d'affichage et clavier. Ce dispositif est adapté à servir d'interface entre deux cartes informatiques compatibles, afin de procéder à un transfert et/ou à un échange de données entre ces cartes. Dans ce cas, le nombre de composants de la carte est minimal et le dispositif informatique en question est un intermédiaire indispensable pour permettre la moindre utilisation des données contenues dans la carte. Cette intervention nécessaire d'un tel intermédiaire constitue, pour certaines applications nouvelles des cartes à puces, un blocage au développement de ces applications qu'il serait intéressant de supprimer.

Une autre solution à ce même problème a été proposée dans la demande de brevet international WO 81/02070 de BENTON qui décrit un outil informatique pour directement tranférer des données fiduciaires dans un outil identique. A cet effet, il comprend dans un boîtier, une alimentation, un microprocesseur, des mémoires, un clavier numérique, des écrans d'affichage des sommes concernées et deux connecteurs électriques complémentaires. Deux outils étant couplés, le transfert de données se fait par affichage de la somme concernée, puis par débit de cette somme dans l'outil émetteur et par son crédit dans l'outil récepteur. Ce type d'outil ne peut pas convenir à l'échange de données par copies réciproques simultanées entre deux particuliers. De plus, il ne peut concerner que deux particuliers à la fois alors qu'un échange rapide de données entre plusieurs personnes est un objectif hautement souhaitable.

Le premier objet de l'invention concerne un outil informatique de communication directe, c'est-à-dire permettant d'effectuer sans intermédiaire un échange de données par copies réciproques, entre deux particuliers disposant de cartes semblables compatibles entre elles.

Le deuxième objet de l'invention concerne un outil informatique de communication directe comportant des moyens de transmission et de réception adaptés aux objectifs de l'outil.

Le troisième objet de l'invention concerne un outil informatique comportant des moyens pour vérifier la faisabilité de l'échange entre deux outils couplés.

Le quatrième objet de l'invention concerne un outil informatique de communication directe permettant un échange général de données entre un nombre relativement élevé d'outils semblables, compatibles entre eux.

Le cinquième objet de l'invention concerne un outil informatique de communication directe comportant des moyens pour repérer dans un empilement d'outils couplés, celui qui ne permet pas un échange général de données.

Le sixième objet de l'invention concerne le dispositif d'exploitation d'un outil informatique de communication adapté, d'une part, à transmettre à cet outil des requêtes de lecture, des instructions d'écriture, d'effacement ou de correction de données et des affectations de programmes particuliers à exécuter et, d'autre part, dans le cadre d'une extension de ses fonctions de base, à lui servir d'interface vis-à-vis d'un système informatique extérieur.

Le septième objet de l'invention est un outil informatique de communication polyvalent, susceptible d'être configuré de manière à pouvoir effectuer des opérations correspondant à plusieurs fonctions différentes, à l'occasion d'un couplage soit avec un outil du même genre soit avec des systèmes informatiques adaptés à ces opérations. Une telle configuration sera faite en exécution d'instructions appropriées, transmises par le dispositif d'exploitation de l'outil.

Selon l'invention, un outil informatique de communication directe entre deux particuliers, adapté à être couplé à un outil semblable en vue d'un échange de données par copies réciproques, comprenant:
- un corps relativement rigide à deux faces principales;
- une source d'énergie électrique;
- un micro-contrôleur et des mémoires;
- des logiciels d'exploitation et de gestion;
- un couple d'organes respectivement émetteur et récepteur de signaux;
- un activateur manuel;
- est caractérisé en ce que:
- les organes émetteur et récepteur de signaux sont disposés sur la même face principale de l'outil, de façon qu'une double liaison puisse être établie entre deux outils couplés;
- l'outil comprend une mémoire des données personnelles et une mémoire des données acquises;
- le logiciel de gestion comprend des moyens pour recopier les données personnelles d'un outil dans la mémoire des données acquises de l'autre.

Selon une caractéristique complémentaire, le logiciel de gestion comprend des moyens pour déterminer la faisabilité de l'opération qui comprennent:
- des moyens pour déterminer les volumes P occupés dans les mémoires des données personnelles à copier et les volumes Q disponibles dans les mémoires des données acquises;
- des moyens pour produire un signal de faisabilité de la double opération prévue lorsque le volume Q d'un outil est supérieur au volume P de l'autre;
- des moyens pour déclencher l'opération de copies réciproques en réponse à ce signal de faisabilité.

Selon une caractéristique complémentaire de la précédente,
- la mémoire des logiciels de gestion contient les caractéristiques fonctionnelles de l'outil et ces logiciels de gestion comprennent:
- des moyens pour déterminer le niveau de compatibilité entre les caractéristiques fonctionnelles des outils couplés;
- des moyens pour produire un signal de faisabilité générale incluant un protocole de communication déduit de ce niveau de compatibilité, lorsque un tel niveau existe et que les conditions Q > P sont satisfaites pour les outils couplés;
- des moyens pour déclencher l'opération de copies réciproques en réponse à ce signal de faisabilité générale.

Selon une autre caractéristique complémentaire des précédentes, l'outil informatique de communication comportant au moins un générateur de signal sensible, sonore et/ou lumineux, son logiciel de gestion comprend:
- des moyens pour commander la production d'au moins un signal sensible déterminé, sonore et/ou lumineux, lorsque l'opération d'échange de données par copies réciproques a été effectuée;
- des moyens pour commander la production d'un autre signal sensible semblable déterminé lorsque la faisabilité de cette opération n'a pas pu être constatée.

Grâce à ces dispositions, les données respectivement contenues dans les mémoires des données personnelles de deux outils informatiques de communication directe selon l'invention, peuvent être aisément échangées, par copies réciproques. A cet effet, la compatibilité entre deux outils couplés et la capacité de chacun à copier les données de l'autre sont préalablement vérifiées. L'échange se traduit par la copie des données personnelles de chaque outil dans la mémoire des données acquises de l'autre. Au moins un signal sensible codé, sonore et/ou lumineux, signalant la bonne fin de l'opération est alors produit. Si l'opération n'a pas été possible pour une raison quelconque, d'autres signaux sensibles codés sont produits qui en expriment la cause.

On notera que les caractéristiques de l'invention énoncées ci-dessus sont cumulatives. Les caractéristiques théoriques minimales d'un outil informatique selon l'invention ne comportent en effet aucun moyen pour vérifier la faisabilité de l'opération et aucun moyen pour en signaler la bonne exécution. Dans un tel cas (peu commercial en vérité mais néammoins envisageable), la bonne exécution de l'opération pourrait toutefois être vérifiée à l'aide du dispositif d'exploitation de l'outil qui sera décrit plus loin.

De la sorte, un outil informatique selon l'invention comportant l'ensemble des caractéristiques décrites ci-dessus, pourra, dans une application intéressante, parfaitement constituer une carte de visite intelligente, professionnelle ou associative, dont les titulaires pourront le plus simplement du monde recopier le contenu dans les cartes de leurs partenaires ou de leurs relations. A cet égard, on notera dès à présent que le contenu de ces cartes de visite intelligentes pourra bien évidemment comporter une quantité d'informations très supérieure à celle imprimée sur les cartes de visite traditionnelles (un texte de quatre pages avec figures est un bon exemple d'une telle quantité usuelle d'informations).

La nature des différents composants de l'outil de communication selon l'invention n'a pas été précisée dans sa définition. A cet égard, on notera dès à présent ce qui suit. Le corps de l'outil sera de préférence une carte ou une plaquette plastique plus ou moins épaisse et rigide, ayant le format des cartes bancaires. Les activateurs manuels seront des circuits comprenant un composant sensible à la pression d'un doigt, tel que transistor à effet de champ, résistance électrique variable ou contact à membrane micrométrique. Les organes émetteur et récepteur de signaux assurant le couplage entre outils contigus pourront être de types divers: électro-mécanique (deux plots conducteurs, l'un avec picot et l'autre sans), inductif (deux bobines en spirale), capacitif (deux plaques d'un condensateur), acoustique (deux éléments piézo-électriques) ou optique (deux diodes, l'une photo-émissive et l'autre photo-réceptive). Le ou les générateurs de signal sensible pourront être de type optique (des diodes lumineuses de couleurs différentes apparaissant sur la tranche de l'outil) ou acoustique (un bruiteur piézo-électrique installé sur le recto de l'outil, c'est-à-dire sur la face portant l'activateur manuel). Avec des organes émetteur ou récepteur électromécaniques ou optiques, pouvant posséder des dimensions très faibles, il sera possible de réaliser des organes de liaison multiple, adaptés à transmettre ou à recevoir simultanément les huit bits d'un octet. L'une des formes que pourra prendre un organe émetteur/récepteur électromécanique multiple sera l'organe de liaison normalisé, prévu pour les cartes bancaires conformes à la norme ISO 7810. La mémoire des données personnelles comprendra de préférence une zône de données non-modifiables chargées en usine et une zône de données modifiables, notamment par l'intermédiaire du dispositif d'exploitation de la carte que possède son titulaire.

Quant au micro-contrôleur utilisé c'est, d'une manière générale, un ensemble formé par une ou plusieurs puces informatiques comprenant au moins un micro-processeur et des périphériques de gestion des mémoires et des entrées/sorties. A titre d'exemples de tels micro-contrôleurs disponibles en 1994, on peut citer les composants respectivement commercialisés par la société japonaise EPSON et la société américaine MOTOROLA, sous les appellations CARD-386 et MC 68 HC 11.

Selon une autre caractéristique de l'invention, une outil informatique du genre décrit ci-dessus, adapté à effectuer un échange de données entre plus de deux particuliers, comprend:
- un activateur manuel et un couple d'organes émetteur et récepteur de signaux, disposés sur chaque face, de telle façon que, dans un empilement ordonné de d'outils, une double liaison puisse être établie entre toute paire d'outils contigus;
- une mémoire des données en transit associée à la mémoire des données acquises;
- des moyens pour mettre l'outil en état de fonctionner un moment en réponse à une action manuelle exercée sur au moins un de ses activateurs;
- des faces respectivement appelées recto et verso afin que, dans un empilement ordonné d'outils, la face recto accessible soit celle du premier outil et la face verso accessible celle du dernier, l'activateur du premier outil étant adapté à déclencher la mise en oeuvre des moyens pour déterminer la faisabilité de l'opération.

Selon des caractéristiques complémentaires, la procédure de vérification de la faisabilité d'une opération d'échange général de données entre les cartes d'un empilement ordonné de plus de deux cartes, comprend deux phases complémentaires de test, l'une descendante à partir de la première carte et l'autre montante, à partir de la dernière. Cette procédure est comparable à celle, mise en oeuvre dans le cas de deux cartes couplées, qui a été brièvement présentée plus haut. Elle a pour objet, d'une part, de vérifier la compatibilité de toutes les cartes de l'empilement, de déterminer le meilleur protocole de communication commun à toutes ces cartes, à partir d'une comparaison faite entre les caractéristiques fonctionnelles de toutes les cartes, et d'autre part, de vérifier que le volume Q disponible dans la mémoire des données acquises de chaque carte est supérieur à la somme des volumes P occupés dans les mémoires des données personnelles des autres cartes.

De même, la procédure d'échange de données, entre deux ou plus de deux cartes, comporte deux phases successives de copie, la première descendante à partir de la première carte et la seconde montante à partir de la dernière, qui mettent en oeuvre des moyens semblables à ceux utilisés dans les cartes de communication entre deux personnes.

Dans ces conditions, lorsque trois cartes informatiques de communication directe selon l'invention, préalablement mises en état de marche, sont correctement empilées et couplées, en réponse à une action manuelle sur l'activateur du recto de la première, un signal de déclenchement général est produit qui fait démarrer deux procédures successives, la première pour vérifier la faisabilité de l'opération envisagée, la seconde pour échanger les données. Lorsque la vérification en question est satisfaisante, les données personnelles contenues dans la première carte sont appelées et formatées en vue de cette communication, puis appliquées au module de transmission de l'émetteur de son verso qui les transmet au récepteur du recto de la deuxième carte.

La deuxième carte procède alors à trois opérations: (1) elle transmet immédiatement à une mémoire-tampon disposée en amont du module de transmission de l'émetteur de son verso les données formatées ainsi reçues, à l'intention du récepteur de recto du troisième carte, (2) elle applique à sa mémoire des données en transit les données formatées ainsi reçues et (3) elle communique ses données personnelles à la troisième carte, de la façon indiquée pour la première. La troisième carte adresse alors à sa mémoire des données en transit les deux lots de données formatées qui lui sont parvenus au cours de cette procédure de communication descendante. Comme cette carte est la dernière de la pile et que, de ce fait, son activateur manuel de verso est à l'état actif, l'opération précédente a pour effet complémentaire de produire une seconde instruction de recopie qui provoque le démarrage d'une procédure de communication montante, symétrique de la procédure de communication descendante qui vient d'être décrite.

Dans ces conditions, à la fin de cette double procédure de communication, chaque carte de la pile a emmagasiné dans sa mémoire des données en transit, les lots des données personnelles des deux autres. A cet instant, peut commencer l'opération de reconditionnement, de rangement et de stockage dans les mémoires des données acquises, des données personnelles des autres cartes, contenues dans les mémoires des données en transit. A cet effet, la première carte de l'empilement, qui vient de recevoir des lots de messages montants et dont l'activateur de recto est à l'état actif, produit une instruction de chargement des mémoires des données acquises immédiatement relayée vers les deux autres. Comme l'activateur de verso de la dernière carte de l'empilement est aussi à l'état actif, au moment de l'exécution de l'ordre reçu, cette dernière carte émet un signal codé, sonore ou lumineux, signifiant la fin de l'ensemble des opérations.

L'opérateur peut alors désassembler les cartes empilées et rendre à chacun des participants celle qui lui revient, le nom du titulaire étant inscrit en clair sur le recto de chaque carte. Le processus peut bien entendu être mis en oeuvre avec deux cartes seulement ou, au contraire, être étendu à un plus grand nombre de cartes assemblées dans un même empilement ordonné (dix par exemple). Dans ce dernier cas, la durée de l'ensemble des opérations devrait être de quelques secondes, pour des lots de données personnelles correspondant à un texte d'une page de format A4.

Grâce à ces dispositions, un carte informatique de communication directe selon l'invention permet, à un nombre relativement grand de participants, d'échanger des quantités relativement importantes d'informations écrites sous forme numérique et ce, d'une manière relativement rapide, sans faire appel au moindre système informatique extérieur.

Selon un aspect complémentaire de l'invention, un outil informatique de l'un des deux types décrits ci-dessus est associé à un microordinateur de poche adapté à constituer un dispositif d'exploitation de cet outil, l'ensemble étant caractérisé en ce que:
- les mémoires de données de l'outil comportent des lots de données identifiés par une série d'appellations déterminées;
- le logiciel de gestion de l'outil comporte des programmes d'application particuliers, identifiés par une autre série d'appellations déterminées;
- le logiciel de gestion du microordinateur comprend des moyens pour affecter l'un et/ou l'autre de ces programmes d'application particuliers à au moins un lot déterminé de données contenu dans l'outil, afin de lui permettre de participer à des opérations effectuées, dans le cadre des fonctions particulières définies par ces programmes d'application, en relation avec des outils semblables et/ou avec des systèmes informatiques extérieurs adaptés à cet effet.

Grâce à ces dispositions, une carte informatique de communication selon l'invention, comportant des lots de données classés "Normalement Disponibles" ou "Normalement Confidentiels", peut à volonté être programmée, à l'aide de son dispositif d'exploitation pour que, à l'occasion du premier couplage avec une carte semblable qui suivra une telle programmation particulière, certains lots normalement disponibles soient bloqués et donc interdits d'échange et/ou certains lots normalement confidentiels ne le soient plus et, de ce fait, exceptionnellement autorisés d'échange.

En outre, à l'occasion de l'insertion de la carte informatique de communication selon l'invention dans un système informatique extérieur adapté à exploiter cette carte, une telle carte convenablement programmée à l'aide de son dispositif d'exploitation usuel, deviendra une carte polyvalente, susceptible de participer aussi à la plupart des opérations effectuées au moyen des cartes informatiques connues présentées ci-dessus. A titre d'exemple, l'un des lots de données classés "Normalement Confidentiel" pourra être constitué par des unités téléphoniques ou fiduciaires préachetées, que l'on pourra débiter après les avoir rendues accessibles à un système informatique extérieur adapté à cet effet.

Par ailleurs, comme tout microordinateur du commerce comporte un connecteur électrique pour établir une liaison avec un système informatique extérieur, il est aisé, d'une part, au moyen d'un tel système, de reconditionner aussi bien le logiciel de gestion de l'outil que le contenu de ses mémoires de données personnelles modifiables et, d'autre part, de connecter l'outil à un système informatique d'exploitation de ses données acquises.

A cet égard, on notera qu'une telle connexion permet de transférer ou de recopier automatiquement dans un système informatique extérieur, les lots de données écrites sous forme numérique récoltées au cours d'un séminaire, d'une exposition ou de tout autre réunion. Cette possibilité est un avantage considérable par rapport au travail fastidieux de classement, de rangement et/ou de saisie informatique manuelle, auquel il faut actuellement procéder pour exploiter convenablement les dizaines de cartes de visite professionnelles ou de cartes de membre de club ou d'association, récoltées au cours de telles réunions. En outre on notera que, par l'intermédiaire du dispositif d'exploitation disposé en interface, il est aisé, au moyen d'un micro-ordinateur standard, de procéder au chargement, dans les zônes modifiables des mémoires de l'outil, des données personnelles de son titulaire et des logiciels de gestion de l'outil.

Les caractéristiques et avantages de l'invention ressortiront d'une manière plus précise des descriptions ci-après de deux types de réalisation d'un outil informatique de communication directe, données à titre d'exemples non-limitatifs, en référence aux dessins annexés dans lesquels:
- les figures 1a et 1b représentent d'une manière simplifiée le recto et le verso d'un outil informatique de communication directe entre deux particuliers;
- la figure 2 représente les moyens de mise en marche de l'outil informatique de la figure 1;
- les figures 3a et 3b représentent d'une manière simplifiée le recto et le verso d'un outil informatique de communication directe entre plusieurs particuliers;
- les figures 4a, 4b et 4c représentent trois coupes longitudinales de l'outil selon la figure 3.
- la figure 5 représente les moyens de mise en marche de l'outil selon la figure 3;
- les figures 6a-6b représentent les modules de transmission et de réception des outils informatiques selon l'invention;
- la figure 7 représente une trame d'un message échangé entre deux outils;
- la figure 8 représente schématiquement le logiciel de vérification de la faisabilité d'une opération d'échange de données entre deux outils selon la figure 1;
- la figure 9 représente les étages fonctionnels de deux outils selon la figure 1, effectuant une opération de recopie de données;
- les figures 10a-10b représentent le logiciel de vérification de la faisabilité d'une opération d'échange général de données entre plusieurs outils selon la figure 3, faisant partie d'un empilement ordonné;
- les figures 11a-11b représentent les étapes fonctionnelles des procédures de recopie descendante et montante des données personnelles d'un outil dans les autres outils d'un empilement;
- la figure 12 représente les étages logiques préliminaires à mettre en oeuvre pour exploiter une variante physique des outils informatiques définis ci-dessus;
- la figure 13 représente sous une forme schématique une récapitulation des étapes d'une opération d'échange général de données entre quatre outils empilés;
- les figures 14a et 14b représentent les moyens permettant à l'outil selon l'invention de s'adapter à plusieurs fonctions, en réponse à des instructions émises par le dispositif d'exploitation.

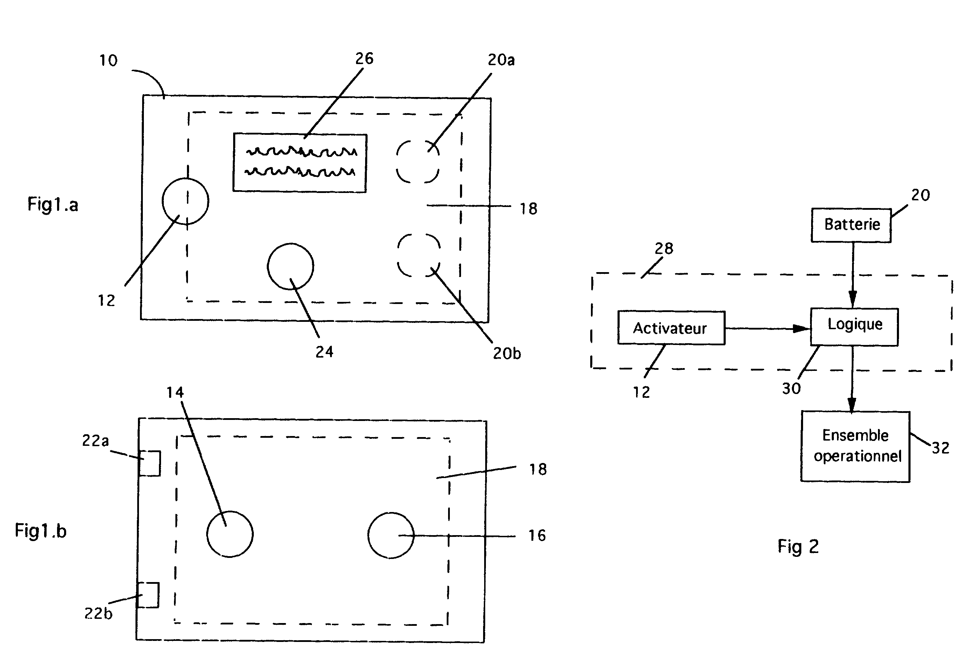

Selon les figures 1a et 1b, un outil informatique 10 de communication directe entre deux particuliers, comporte un support constitué par une plaquette rigide, de format identique à celui des cartes bancaires avec une épaisseur sensiblement triple (2,5 mm). Cette forme de réalisation est présentée à titre d'exemple non limitatif. Elle est déterminée par les épaisseurs minimales des composants électroniques et électriques disponibles sur le marché, fin 1993. Sur le recto de l'outil 10 (fig.1a), sont disposés un activateur 12 et un générateur sonore 24 et sur son verso, un organe émetteur 14 et un organe récepteur 16. A l'intérieur, il comporte une feuille relativement rigide 18 portant des circuits intégrés et deux batteries électriques rechargeables 20a et 20b, de 1,5 Volts chacune, montée en série. Deux plots conducteurs 22a-22b disposés sur le verso de l'outil (fig.1b) sont reliés aux bornes externes des batteries 20. L'activateur manuel 12 est un circuit électrique comprenant, par exemple, un transistor à effet de champ qui passe à l'état conducteur lorsque l'opérateur y pose un doigt. Les organes émetteur 14 et récepteur 16 sont, par exemple, de type inductif et comprennent chacun une bobine en spirale imprimée sur un support isolant. Le recto de l'outil 10 porte une inscription 26 identifiant son titulaire.

Selon la figure 2, la mise en état de marche de l'outil informatique selon l'invention fait appel à un ensemble de circuits 28, constamment alimenté par la batterie 20, qui comprend l'activateur 12 et un interrupteur 30 monté en série entre la batterie 20 et la borne d'alimentation d'un ensemble opérationnel 32 comprenant un micro-contrôleur, des mémoires, des étages logiques et des étages analogiques. L'outil 10 demeure à l'état de marche aussi longtemps que l'activateur manuel 12 est à l'état actif.

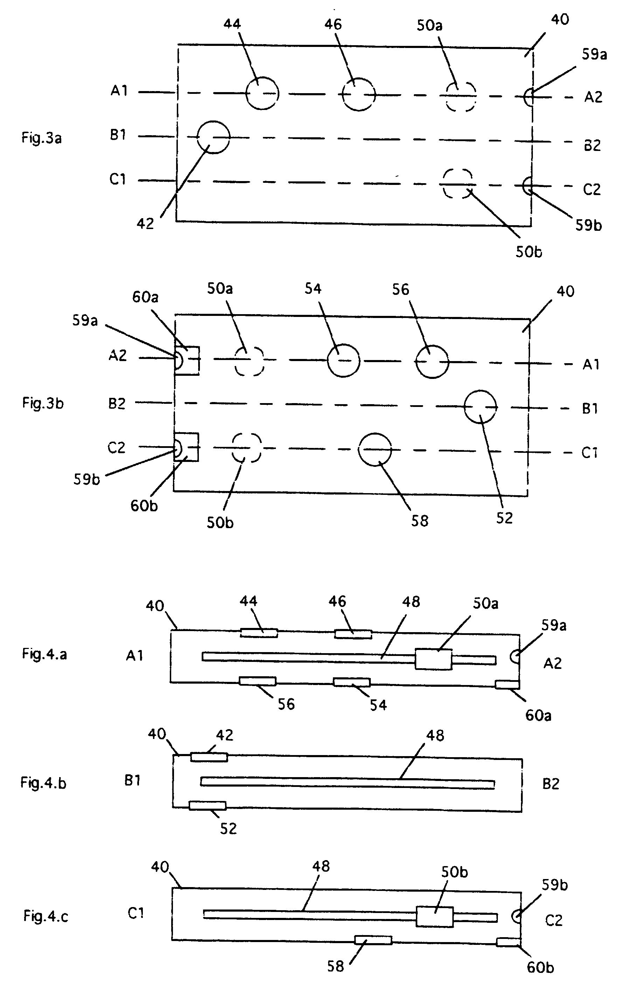

Selon les figures 3a-3b et 4a-4b-4c, un outil informatique 40 de communication directe entre plusieurs particuliers (de deux à douze, par exemple) est, pour ce qui concerne les dimensions, identique à l'outil 10 de la figure 1. Sur le recto de l'outil 40 (fig.3a), sont disposés un activateur manuel 42, un émetteur 44, un récepteur 46 et, sur son verso (fig.3b), un activateur manuel 52, un émetteur 54, un récepteur 56, un générateur sonore 58 et deux plots conducteurs 60a-60b. A l'intérieur, l'outil 40 comporte une feuille relativement rigide 48 portant des circuits intégrés et deux batteries 50a-50b montées en série. Les positions des deux couples d'émetteur et de récepteur sur le recto et le verso de l'outil 40 sont inversées de façon que, dans un empilement ordonné d'outils, un émetteur de verso 54 soit en regard d'un récepteur de recto 46 et inversement. Les activateurs 42-52, les émetteurs 46-56, les récepteurs 44-54 et les batteries 50 de l'outil 40 sont respectivement identiques à l'activateur 12, à l'émetteur 16, au récepteur 14 et aux batteries 20 de l'outil 10. Deux indicateurs lumineux 59a-59b, rouge et vert par exemple, apparaissent sur la tranche de l'outil.

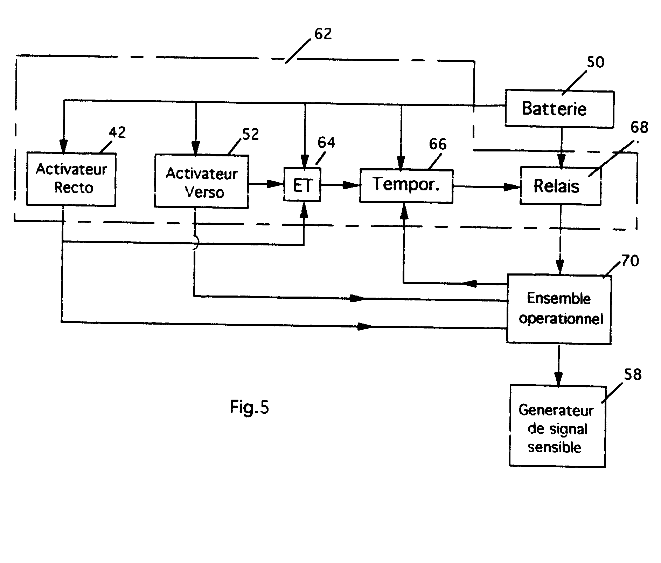

Selon la figure 5, les moyens de mise en marche de l'outil informatique 40 comportent un ensemble 62 de circuits constamment alimentés par la batterie 50, incluant les activateurs de recto et de verso 42-52 reliés aux deux entrées d'une porte ET 64 et un circuit de temporisation 66 suivi d'un relais 68 disposé en série entre la batterie 50 et l'ensemble des circuits opérationnels 70 de l'outil 40. La durée de fonctionnement du circuit de temporisation 66 (de 60 à 120 secondes par exemple) est gérée par le micro-contrôleur que comporte l'ensemble 70, auquel les activateurs 42-52 sont par ailleurs directement reliés. Dès la mise en marche de l'outil, le micro-contrôleur applique un signal de commande de signalisation au générateur de signal sonore 58.

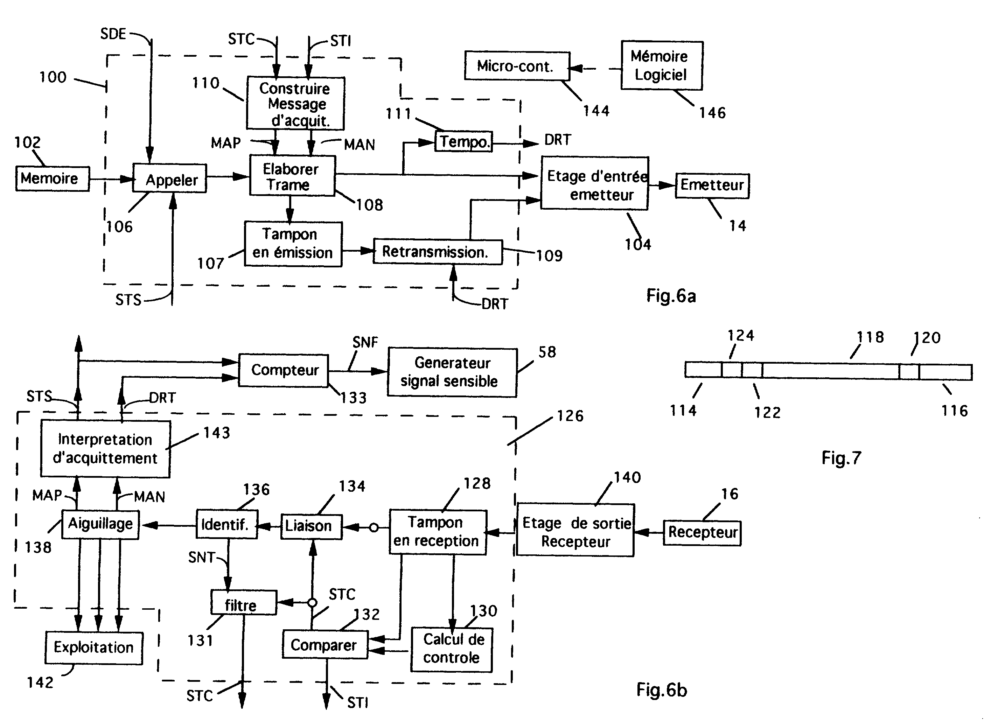

Les figures 6a-6b représentent les modules de transmission et de réception d'un outil informatique 10 ou 40 et de son dispositif d'exploitation. Selon la figure 6a, le module de transmission 100 d'un tel outil ou d'un tel dispositif, est fonctionnellement disposé entre une mémoire de données 102 et l'étage d'entrée 104 d'un organe émetteur 14 (ou 44-54). Le module de transmission 100 comprend deux étages logiques de base 106 et 108, et, en cas de contrôle de bonne réception des messages, quatre étages complémentaires 107-109-110-111. L'étage logique 106 a pour fonction d'appeler les données contenues dans la mémoire concernée 102, en réponse à un signal de déclenchement adéquat extérieur SDE ou de trame suivante STS dont les diverses origines possibles seront précisées plus loin. L'étage logique 108 a pour fonction d'élaborer à partir des données ainsi appelées les trames formatées du message destiné à circuler sur un bus de communication. Cet étage 108 est relié à l'étage d'entrée 104 de l'organe émetteur concerné, cet étage 104 ayant pour fonction d'amplifier en courant les signaux produits par l'étage 108 et de les appliquer à l'organe émetteur 14 ou 44-54.

L'étage logique 110 a pour fonction de produire un message d'acquittement positif MAP ou négatif MAN, en réponse à des signaux de trame correcte STC ou incorrecte STI, produits par le module de réception 126. Les messages d'acquittement ainsi produits sont appliqués à l'étage logique 108 qui les transforme en trames formatées. L'étage logique 107 est une mémoire-tampon d'émission associée à l'étage logique 108 afin de mémoriser un moment la dernière trame émise. L'étage logique de retransmission 109 est relié à l'étage 107 et il est adapté à appliquer à l'étage d'entrée 104 de l'organe émetteur 14 la trame mémorisée dans la mémoire-tampon 107, en réponse à un signal de demande de retransmission DRT produit soit par le module de réception 126 soit par un étage de temporisation 111. Cet étage 111 produit un signal DRT lorsque l'intervalle entre deux trames successives est supérieur à une durée déterminée, ce qui signifierait une coupure instantanée dans la double liaison établie entre les deux outils couplés.

La figure 7 représente une trame du message élaboré par l'étage logi-que 108. Chaque trame (sauf en général la dernière) comportent un nombre déterminé d'octets (64 par exemple). La cadence des bits émis sera de préférence comprise entre 0,1 et 1 Mégabit par seconde. Chaque trame comprend deux champs normalisés de début et de fin 114-116, un champ de données 118, un champ 122 d'identification de la nature des données du message et un champ indicateur 124 de la position de la trame dans le message (par exemple, la première, la dernière et une intermédiaire). Dans le cas où l'on recherche une sécurité maximale de réception, chaque trame comporte en outre un champ de contrôle 120.

Selon la figure 6b, le module de réception 126 d'un outil informatique 10 ou 40 comprend trois étages logiques de base 128-136-138 fonctionnellement disposés entre l'étage de sortie 140 d'un organe récepteur 16 (ou 46-56) et différents étages d'exploitation 142 et, en cas de contrôle de bonne réception, quatre étages complémentaires 130-131-132-134 et un étage d'interprétation de messages 143. L'étage logique 128 est une mémoire-tampon adaptée à mémoriser au moins une trame du message reçu. L'étage logique 130 a pour fonction de calculer le champ de contrôle de la trame ainsi mémorisée en lui appliquant un algorithme adéquat. L'étage logique 132 a pour fonction de comparer le champ de contrôle inclus dans la trame en question et celui calculé à partir du contenu de cette trame. Lorsque ces deux champs de contrôle sont identiques, l'étage logique 132 délivre un signal de trame correcte STC et, dans le cas contraire, un signal de trame incorrecte STI. Le signal STC est appliqué en commande à un étage de liaison 134 fonctionnellement disposé entre la mémoire-tampon 128 et deux étages logiques 136 et 138. L'étage 136 est adapté à analyser le champ d'identification 122 de chaque trame du message reçu et le second 138, à opérer en fonction du résultat de cette analyse, afin d'aiguiller chaque trame vers les différents étages d'exploitation 142 ou l'étage d'interprétation 143 que comporte l'outil. Le signal de trame correcte STC est aussi appliqué à un étage logique de filtrage 131 recevant par ailleurs un signal binaire de nature de trame SNT, produit par l'étage d'identification de messages 136, signifiant que la trame appartient soit à un message de données à recopier soit à un message d'acquittement. En réponse à ces deux signaux, l'étage de filtrage 131 est adapté à produire un signal de trame correcte STC, dans le cas où le signal de nature de trame SNT signifie une trame d'un message de données à recopier et à bloquer ce signal STC dans le cas où il s'agit d'un message d'acquittement MAP ou MAN.

Le signal de trame correcte STC ainsi produit par l'étage de filtrage 131 ainsi que le signal de trame incorrecte STI produit par l'étage de comparaison 132 sont appliqués aux entrées de l'étage 110 de production des messages d'acquittement MAP et MAN. Lorsque l'étage d'identification 136 du module de réception 126 reconnaît que la trame du message reçu est une trame de message d'acquittement MAP ou MAN, l'étage d'aiguillage 138 la dirige vers l'étage d'interprétation de messages 143. En réponse à un message MAP, cet étage 143 produit un signal STS de déclenchement d'appel de la trame suivante et l'applique à l'étage logique d'appel 106 du module de transmission 100. En réponse à un message MAN, l'étage 143 produit un signal de demande de retransmission de trame DRT, appliqué en commande à l'étage 109. Le signal DRT est par ailleurs appliqué à l'entrée de comptage d'un étage compteur 133 et le signal STS, appliqué à son entrée de remise à zéro. L'étage compteur 133 est adapté à produire un signal de sortie lorsque le nombre de signaux DRT comptés devient supérieur à un seuil déterminé. Ce qui signifie que les retransmissions de trames sont restées sans effet et donc qu'une coupure existe dans la liaison entre deux outils couplés. Ce signal de sortie est appliqué en commande au générateur de signal sensible 24 ou 58.

Le champ de contrôle 120 de chaque trame ainsi que les étages logiques 107-109-110-111 du module de transmission 100 et ceux 131-132-133-134-143 du module de réception 126 qui exploitent ce champ de contrôle, peuvent être supprimés, en cas d'absence de perturbations pouvant affecter les organes émetteur et/ou récepteur de l'outil. Ce qui est le cas notamment pour des organes émetteur/récepteur électro-mécaniques ou optiques.

Les modules de transmission 100 et de réception 126 sont des sous-ensembles du logiciel de gestion de l'outil 10, contenu dans une mémoire 146, mis en oeuvre par un micro-contrôleur 144.

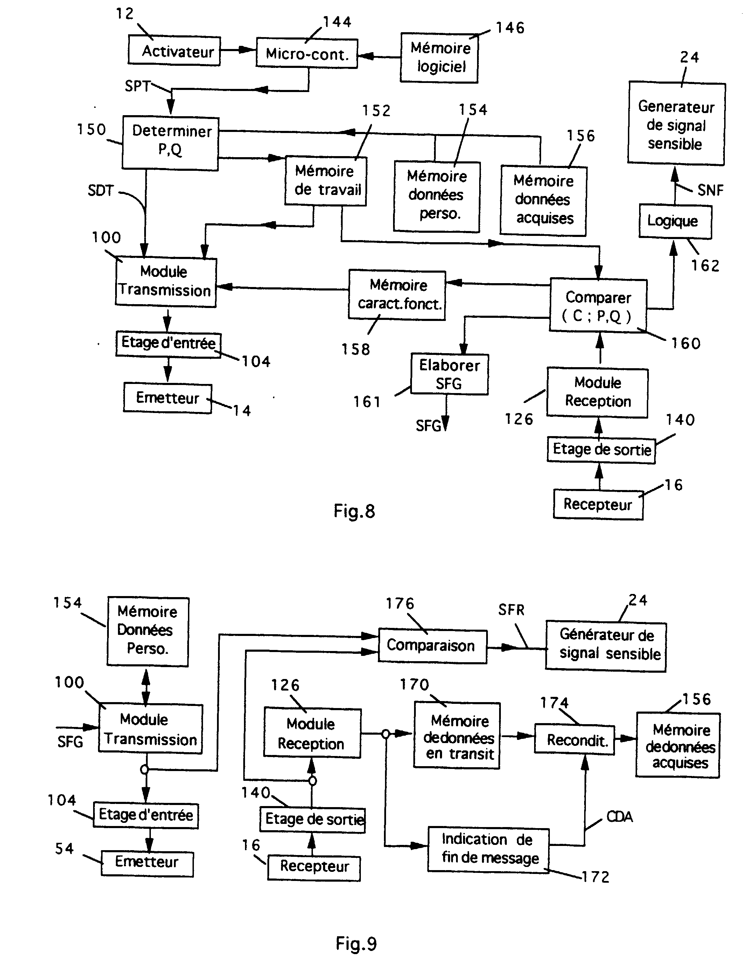

Selon la figure 8, qui représente le schéma fonctionnel des moyens de vérification de la faisabilité d'une opération d'échange de données entre deux outils informatiques selon la figure 1, une action manuelle sur l'activateur 12 de chaque outil, a pour premier effet de les mettre à l'état actif et ensuite de faire produire par le micro-contrôleur 144 de chacun d'eux, un signal de préparation de test SPT, appliqué à un étage logique 150. L'étage logique 150 de chaque outil est adapté, en réponse à ce signal SPT, à interroger la mémoire des données personnelles 154 et la mémoire des données acquises 156, à déterminer le volume P occupé dans la mémoire des données personnelles 154 et le volume Q disponible dans la mémoire des données acquises 156 puis à appliquer ces données P et Q à une mémoire de travail 152.

Lorsque cette opération est terminée, l'étage logique 150 délivre un signal de déclenchement de test SDT à l'intention du module de transmission 100. En réponse à ce signal de déclenchement SDT, le module de transmission 100 de chaque outil appelle l'une des données P ou Q stockée dans sa mémoire de travail 152 ainsi qu'au moins l'une de ses caractéristiques fonctionnelles stockée dans une mémoire 158, que l'autre outil doit nécessairement connaître pour être en mesure de réaliser l'opération d'échange de données projetée. Parmi ces caractéristiques fonctionnelles statiques, on trouve la définition de l'application concernée et, dans le cas où plusieurs versions successives de l'outil existent sur le marché, la définition du protocole de communication de l'outil. A cet égard, on notera que le protocole de communication de la première version d'un outil de communication selon l'invention est bien entendu compatible avec celui des versions suivantes, chaque nouveau protocole incluant le ou les protocoles antérieurs, à titre de protocoles dégradés.

Les données ainsi appelées par le module de transmission 100 de chaque outil sont traitées comme cela a été indiqué en commentaires de la figure 6a et finalement, un message de test les contenant est appliqué en signal de commande à l'étage d'entrée 104 de l'organe émetteur 14 de chaque outil. En conséquence, l'étage de sortie 140 de l'organe récepteur 16 de chaque outil reproduit le message de test que l'autre outil lui a transmis. Ce message de test est appliqué au module de réception 126 qui l'identifie comme tel et l'applique en conséquence à un étage logique de comparaison 160. Cet étage 160 reçoit par ailleurs les données mémorisées en 158, transmises par le module de transmission 100, et la donnée P ou Q mémorisée en 152 non-transmise par le module 100. L'étage logique de comparaison 160 est adapté à produire un signal de sortie lorsque (1) les définitions des applications des deux outils sont identiques, (2) un protocole de communication commun Cc est trouvé entre les deux outils et (3) la donnée Q de chacun est supérieure à la donnée P de l'autre. Ce signal de sortie est appliqué à un étage logique 161 adapté à produire un signal de faisabilité générale SFG à l'intention des étages logiques qui seront décrits plus loin. Ce signal SFG contient la définition du protocole de communication Cc, commun aux deux outils couplés.

Selon la figure 9, qui représente le schéma fonctionnel des moyens mis en oeuvre au cours d'un échange de données entre deux outils selon la figure 1, le signal de faisabilité générale SFG, produit par l'étage logi-que 161 de la figure 8, est appliqué en signal de déclenchement au module de transmission 100. En réponse, ce module 100 appelle les données contenues dans la mémoire des données personnelles 154 et les transforme en un message à recopier appliqué en signal de commande à l'étage d'entrée 104 de l'organe émetteur 14. Sur l'outil couplé, l'étage de sortie 140 de la bobine de réception 16 reproduit le message ainsi transmis et l'applique au module de réception 126. Celui-ci reconnait le champ d'identification 122 du message reçu et, en conséquence, adresse le message à une mémoire des données en transit 170 ainsi qu'à un étage logique 172, adapté à détecter la fin du message reçu dans le champ indicateur 124 de la position de la dernière trame de ce message. Dès que cette détection est faite, une instruction de chargement CDA de la mémoire des données acquises 156 est produite et appliquée à un étage logique 174, adapté à reconditionner les données formatées contenues dans la mémoire des données en transit 170, à les transférer dans la mémoire des données acquises 156. On notera que ce transfert sera réel ou virtuel selon que les zônes de mémoires affectées aux données en transit 170 et aux données acquises 156 sont différentes par leur localisation ou seulement par leur qualification. Par ailleurs, le message produit par le module de transmission 100 ainsi que celui produit par l'étage de sortie 140 du récepteur 16, sont appliqués à un étage logi-que de comparaison 176. Cet étage 176 est adapté à détecter les instants de fin des deux messages émis et reçu, à partir des champs indicateurs 124 des dernières trames de ces messages, et à produire un signal de fin de réception SFR lorsque la fin du message reçu apparaît après la fin du message émis. Ce signal SFR (une suite particulière de longues et de brèves, par exemple) signifiant la bonne fin de l'opération, est appliqué en commande au générateur de signal sonore 24 de l'un des deux outils couplés, cet outil étant choisi selon un critère de sélection quelconque.

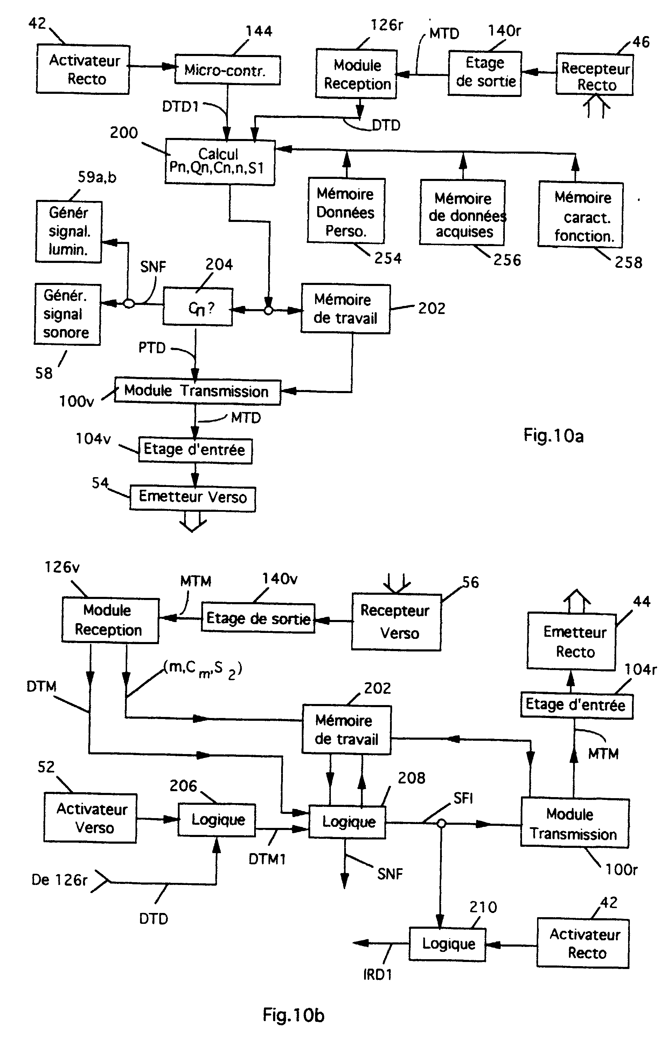

Les figures 10a-10b représentent les deux parties du schéma fonctionnel des moyens de vérification de la faisabilité d'une opération d'échange général de données entre plusieurs outils selon la figure 3, préalablement mis en état de marche. Selon la figure 10a, un signal initial de déclenchement de test descendant DTD1 fait démarrer l'opération. Ce signal DTD1 est produit par le micro-contrôleur 144, en réponse à une action manuelle sur l'activateur de recto 42 de l'outil lorsqu'il est le premier dans l'empilement ou, dans le cas contraire, par le module de réception 126r associé à l'étage de sortie 140r du récepteur de recto 46. Dans le premier cas, le signal DTD1 contient seulement des instructions de calcul pour l'étage logique 200 auquel il est appliqué. Dans le second cas, un signal de déclenchement de test descendant DTD est inclus dans un message de test descendant MTD qui comprend de plus le rang (n-1) de l'outil précédent et les caractéristiques fonctionnelles statiques Cₙ₋₁ communes aux (n-1) outils précédents. En réponse au signal DTD, l'étage logique 200 est adapté (1) à incrémenter d'une unité le rang (n-1) de l'outil précédent, (2) à interroger les mémoires 254, 256 et 258 de l'outil de rang n, (3) à calculer le volume Pₙ occupé dans la mémoire des données personnelles 254, le volume Qₙ disponible dans la mémoire des données acquises 256, les données de la mémoire 258 des caractéristiques fonctionnelles statiques, communes Cₙ à l'outil concerné et aux (n-1) outils disposés au-dessus de lui, et la somme S₁ des données P de ces (n-1) outils et (4) à appliquer les données Pₙ, Qₙ, Cₙ, n et S₁ à une mémoire de travail 202.

La détermination des caractéristiques communes Cₙ comporte une étape préalable: vérifier que l'application du premier outil se retrouve dans chacun des autres outils. De plus, l'étage de calcul 200 est relié à un étage logique 204 adapté à produire deux signaux, le premier de poursuite de test descendant PTD, quand une donnée Cₙ a pu être obtenue et le second, de non-faisabilité SNF, quand aucune caractéristique commune Cₙ n'a pu être trouvée entre l'outil concerné de rang n et les (n-1) outils précédents. Le signal SNF est codé et appliqué en signal de commande au générateur de signal sonore 58 et aux deux indicateurs lumineux de couleurs différentes 59a-59b. La présence d'un outil incapable de participer à l'échange est signalée par le générateur sonore et cet outil est immédiatement repéré par ses deux indicateurs lumineux. De ce fait, un outil déficient pourra être rapidement retiré pour permettre la poursuite de l'opération d'échange général de données avec les autres outils.

Le signal de poursuite de test descendant PTD est appliqué en signal de déclenchement au module de transmission 100v qui, en réponse, élabore un nouveau message de test descendant MTD, comprenant un signal de test descendant STD et toutes les données stockées dans la mémoire de travail 200, et l'applique à l'étage d'entrée 104v de l'émetteur de verso 54. L'étage de sortie 140r du récepteur de recto 46 de l'outil suivant de rang (n+1) reproduit ce message de test descendant MTD et son module de réception 126r en extrait un signal de déclenchement de test descendant DTD pour l'outil de rang (n+2).

Selon la figure 10b, lorsque le dernier outil de l'empilement, de rang m, reçoit un tel message de test descendant, le signal DTD qu'il contient est appliqué à l'une des deux entrées d'un étage logique 206 (inopérant pour tous les autres outils) dont l'autre entrée est reliée à l'activateur de verso 52. Dans le dernier outil, l'activateur de verso 52 est à l'état actif et, dans ces conditions, l'étage logique 206 transforme le signal DTD reçu en un premier signal de déclenchement de test montant DTM1 qui contient des instructions opératoires appliquées à un étage de calcul 208. En réponse à ces instructions, l'étage 208 du dernier outil détermine si le volume Qₘ disponible dans sa mémoire des données acquises 256 est supérieur à la somme S₁ des volumes P occupés par les données personnelles des (m-1) disposés au-dessus de lui, contenue dans la mémoire de travail 202. Ensuite, dans tous les autres outils, l'étage 208 calcule de plus la somme S₂ de la donnée Pₙ de l'outil concerné et des (m-n) données P des outils qui sont disposés au-dessous de lui. Dans le cas du dernier outil, ce terme S₂ = Pₘ. Si une telle donnée Cₘ commune à tous les outils est obtenue et si la donnée Qₘ a une valeur suffisante, l'étage logique 208 produit un signal de faisabilité individuelle SFI, appliqué en signal de déclenchement au module de transmission 100r. En réponse, ce module 100r appelle les données contenues dans la mémoire de travail 202 puis élabore un message de test montant MTM qui contient le rang m du dernier outil, les Cₘ et S₂ ainsi qu'un signal de déclenchement de test montant DTM. Ce message de test montant MTM est appliqué à l'organe émetteur de recto 44 par l'intermédiaire de son étage d'entrée 104r. Au contraire, si une donnée Cₘ ne peut être obtenue pour le dernier outil et/ou si sa donnée Qₘ est insuffisante pour recopier la somme S₁ des données P des outils disposés au-dessus de lui, l'étage logique 208 produit un signal codé de non-faisabilité SNF, appliqué en signal de commande au générateur de signal sonore 58 et aux deux indicateurs lumineux 59a-59b, comme cela a été dit ci-dessus.

Dans chaque outil qui reçoit ce message de test montant MTM, le module de réception 126v relié à l'étage de sortie 140v du récepteur de verso 56, identifie les données m, Cₘ et S₂ transmises et les applique à la mémoire de travail 202. L'étage logique 208 qui reçoit le signal DTM du message calcule (1) la somme S = (S₁+S₂) des données P de tous les autres outils de l'empilement et (2) la somme S₂ des données P afférentes à l'outil et aux outils qui sont disposés au-dessous de lui. Ces calculs faits, l'étage logique 208 procède aux vérifications décrites pour le dernier outil et produit selon le cas un signal de faisabilité individuelle SFI ou un signal de non-faisabilité SNF qui sont constitués puis exploités de la manière indiquée plus haut. Lorsqu'un tel signal SFI est produit par l'étage logi-que 208 du premier outil de l'empilement, il est appliqué à l'une des deux entrées d'un étage logique 210 (inopérant pour tous les autres outils) qui reçoit sur son autre entrée, la sortie de l'activateur de recto 42 et, en réponse, produit une instruction initiale de recopie descendante IRD1.

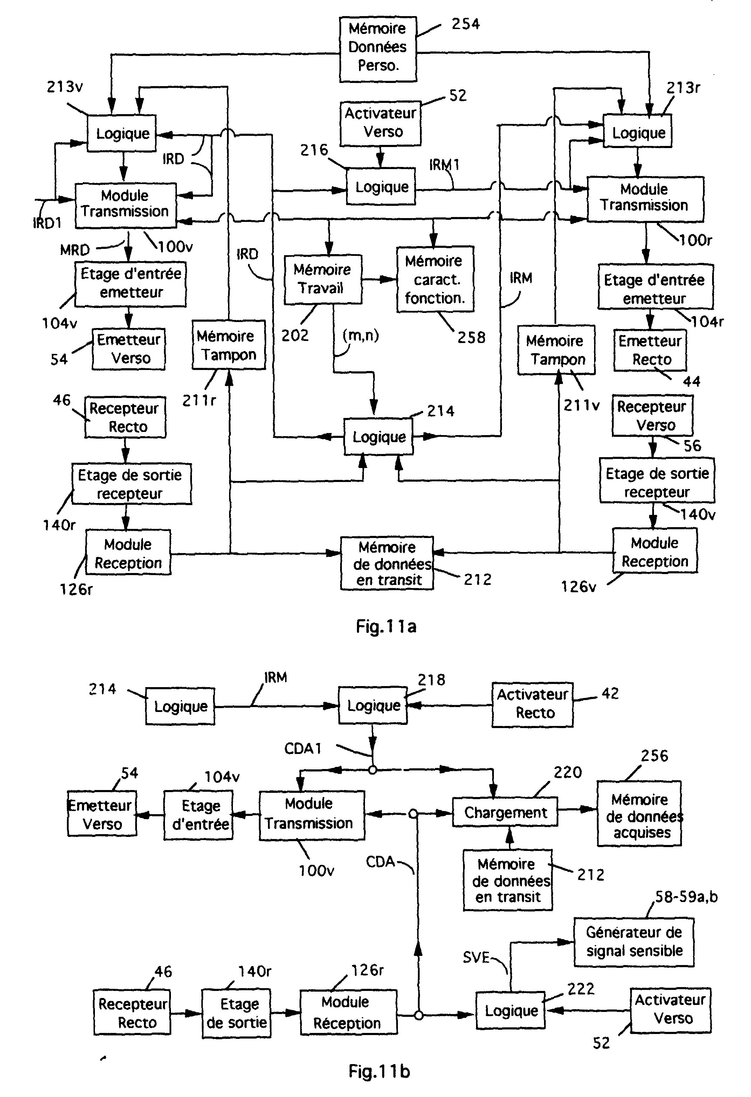

Les figures 11a et 11b représentent le schéma fonctionnel de la procédure de recopie dans la mémoire de transit d'un outil, des données personnelles des autres outils et celui de leur transfert dans la mémoire des données acquises de cet outil. Selon la figure lla, l'instruction initiale de recopie descendante IRD1 est appliquée en signal de déclenchement au module de transmission 100v et à un étage logique de commutation 213v dont l'une des deux entrées est reliée à la mémoire des données personnelles 254 de l'outil. En réponse à une instruction IRD1 pour le premier outil de l'empilement et d'une instruction IRD pour les autres, le module de transmission 100v appelle les données contenues dans la mémoire 254 des données personnelles puis, à partir de ces données et en accord avec le protocole de communication commun, contenu dans la mémoire 258 des données caractéristiques statiques de l'outil, sélectionné par la donnée Cₘ contenue dans la mémoire de travail 202, il élabore un message de recopie descendante MRD appliqué en signal de commande à l'étage d'entrée 104v de l'émetteur de verso 54.

Dans l'outil contigu du premier outil, le module de réception 126r, relié à l'étage de sortie 140r du récepteur de recto 46, reproduit ce message de recopie et l'applique à une mémoire de données en transit 212, à une mémoire-tampon 211r, disposée en amont de l'étage logique 213v et du module de transmission 100v, et à un étage logique 214. Cet étage logique 214 est relié à la mémoire de travail 202 qui contient le rang n de l'outil et celui m du dernier outil de l'empilement. L'étage 214 détermine le nombre (n-1) de messages à recevoir au cours de la procédure de recopie descendante et, à partir de ce nombre et du champ indicateur 124 de la dernière trame du dernier message à recevoir, il produit une instruction de recopie descendante. Cette instruction IRD est appliquée en signal de commande de commutation à l'étage logique 213v et en signal de déclenchement au module de transmission 100v. Aussi longtemps que l'étage logique 214 ne détecte pas le champ indicateur de la dernière trame du dernier message reçu, l'étage logique de commutation 213v applique au module de transmission 100v les trames successivement présentes dans la mémoire-tampon 211r et ce module 100v les applique en l'état à l'étage d'entrée 104v de l'organe émetteur de verso 54. En réponse à une instruction IRD, l'étage logique 213v connecte au module de transmission 100v la mémoire des données personnelles 254 de l'outil. De la sorte, le message incident provenant des outils précédents est relayé aux outils suivants puis il est complété par le message de données afférentes à l'outil concerné.

Dans l'outil suivant, le récepteur de recto 46 reçoit une suite de messages à recopier et l'étage 214 détecte l'indication de fin du dernier message reçu. Le processus de recopie descendante se poursuit jusqu'au dernier outil de l'empilement. Celui-ci reçoit donc une suite de messages constitués par les lots successifs des données personnelles de tous les outils qui sont disposés au-dessus de lui. Si la rang du dernier outil est m, sa mémoire de transit 212 contient (m-1) lots de données cependant que la mémoire de transit de l'outil de rang n contient les (n-1) lots des outils qui le précèdent. L'indication de fin du dernier message, appliquée à l'étage logique 214 du dernier outil de l'empilement, se transforme en une instruction IRD appliquée à un étage logique 216 (inopérant pour tous les autres outils) en même temps que la sortie active de l'activateur de verso 52.

En réponse, cet étage logique 216 produit une instruction initiale de recopie montante IRM1 appliquée en signal de déclenchement à son module de transmission 100r. Ce module 100r relié à l'émetteur de recto 44 du dernier outil, opère de la même façon que le module de transmission 100v relié à l'émetteur de verso 54 du premier outil de l'empilement. Lorsque ce premier outil a reçu la série des messages contenant les lots de données personnelles de tous les autres outils, la mémoire des données en transit 212 de chacun des outils de l'empilement contient les lots de données personnelles de tous les autres. Au cours de cette procédure de recopie montante, l'étage logique 214 produit des instructions IRM après avoir calculé le nombre (m-n) de messages à recevoir.

Selon la figure 11b, l'étage logique 214 du premier outil de l'empilement produit une instruction IRM appliquée à un étage logique 218 en même temps que l'état actif de l'activateur de recto 42. En réponse, cet étage logique produit une instruction initiale de chargement CDA1 de la mémoire des données acquises 256 de l'outil en question. Dans le premier outil, cette instruction CDA1 est appliquée à un étage de reconditionnement et de chargement 220 adapté à appeler les lots de données formatées, contenus dans la mémoire des données en transit 212, et à les adresser reconditionnés à la mémoire des données acquises 256. Cette opération sera réelle ou virtuelle selon que les zônes de mémoires concernées, 212 et 256, seront différentes par leur localisation ou simplement par leur qualification. En outre cette instruction CDA1 est, via le modue de transmission 100v, appliquée en signal de commande à l'étage d'entrée 104v de l'émetteur de verso 54 du premier outil. De la sorte, l'instruction CDA est relayée d'outil en outil. Le module de réception 126r, relié au récepteur de recto 46 de chaque outil concerné, reproduit cette instruction CDA et l'applique à son étage d'entrée 104v, via le module de transmission 100v, et directement à son étage logique de chargement 220. Le dernier outil applique cette instruction CDA à un étage logique 222 (inopérant pour tous les autres outils) en même temps que la sortie active de l'activateur de verso 52. En réponse, l'étage 222 produit un signal codé de validation de l'échange SVE, appliqué en signal de commande aux générateurs sonore et lumineux 58-59a-59b du dernier outil, le générateur sonore 58 attirant l'attention de l'opérateur et les indicateurs lumineux 59a-59b lui signifiant la validation en question.

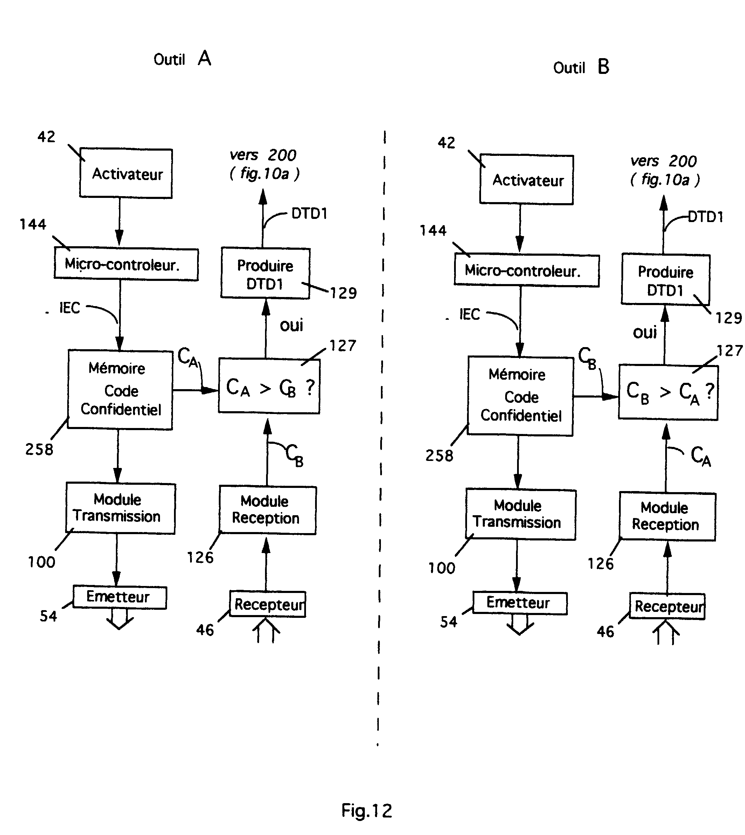

La figure 12 représente les modifications qu'il faut apporter au logiciel de gestion de l'outil de communication directe entre plusieurs particuliers selon l'invention, lorsque cet outil ne comporte qu'un seul activateur manuel. Selon la figure 12, les deux outils extrêmes d'un empilement d'outils préalablement mis en état de marche, sont référencés A et B. L'unique activateur manuel 42 disposé sur une face de chaque outil extrême est accessible. La mise à l'état actif de cet activateur 42 a pour effet de provoquer dans le micro-contrôleur 144, la production d'une instruction d'envoi du code confidentiel d'accès IEC, adressée à la mémoire 258 des caractéristiques fonctionnelles de l'outil qui contient ce code. En première réponse, cette mémoire 258 adresse le code CA pour l'outil A et CB pour l'outil B au module de transmission 100 associé à l'organe émetteur 54 disposé sur l'autre face de l'outil. Les organes récepteur/émetteur des autres outils empilés relaient ce message jusqu'au récepteur 46 de l'autre outil extrême et donc jusqu'à son module de réception 126, lequel l'applique à un étage de comparaison 127. En seconde réponse à l'instruction IEC, la mémoire 258 adresse directement son code d'accès CA ou CB à cet étage de comparaison 127. Cet étage 127 est adapté à déterminer si le nombre à dix chiffres (par exemple) du code transmis directement par la mémoire 258 est supérieur ou non au nombre constitué par le code d'accès de l'autre outil extrême que lui applique le module de réception 126. En application de ceci, l'étage 127 de l'outil A résoud l'interrogation CA > CB ? et celui de l'outil B, l'interrogation CB > CA ? La réponse est OUI pour un seul d'entre eux. Cette réponse est adressée à un étage logique 129 adapté à produire l'instruction initiale de déclenchement de test descendant DTD1, visée plus haut, adressée à l'étage de calcul 200 (voir Fig.10a). L'étape de détermination de la faisabilité de l'opération démarre alors, exactement comme cela a été décrit précédemment.

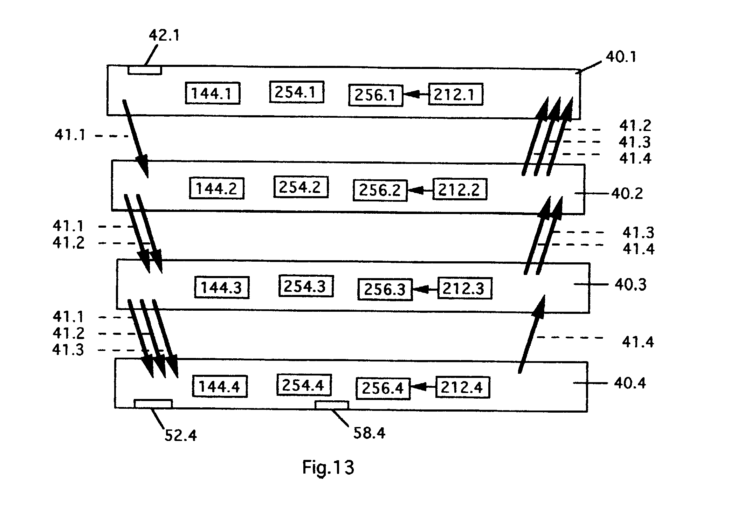

La figure 13 est une représentation récapitulative des étapes d'un échange de données dans un empilement de quatre outils selon l'invention. Du premier au dernier, les outils sont référencés 40.1, 40.2, 40.3 et 40.4. L'activateur de recto 42.1 du premier outil 40.1 et l'activateur de verso 52.4 du dernier 40.4 sont les seuls accessibles et les seuls représentés. Il en est de même du générateur sonore 58.4 de ce dernier. A l'intérieur des outils 40.1...40.4, sont respectivement schématisés les micro-contrôleurs 144.1 ...144.4, les mémoires des données personnelles 254.1...254.4, les mémoires des données en transit 212.1... 212.4 et les mémoires des données acquises 256.1...256.4. Les trois flèches descendantes 41.1 représentent les données personnelles de l'outil émetteur 40.1 qui sont successivement communiquées aux trois outils 40.2, 40.3, 40.4 récepteurs de ces données. De même, les deux flèches descendantes 41.2 représentent les données personnelles de l'outil émetteur 40.2 qui sont successivement communiquées aux deux outils récepteurs 40.3 et 40.4. Il en est de même pour la flèche descendante 41.3 à l'égard de l'outil émetteur 40.3 et de l'outil récepteur 40.4. Symétriquement, une référence semblable est donnée à la flèche montante 41.4 et des références identiques aux flèches montantes 41.3 et 41.2. Lorsque les données personnelles des autres outils sont arrivées dans un outil déterminé, elles sont un moment stockées dans la mémoire 212 des données en transit de cet outil, puis elles sont transférées dans sa mémoire des données acquises 256, comme cela a été expliqué en détail ci-dessus.

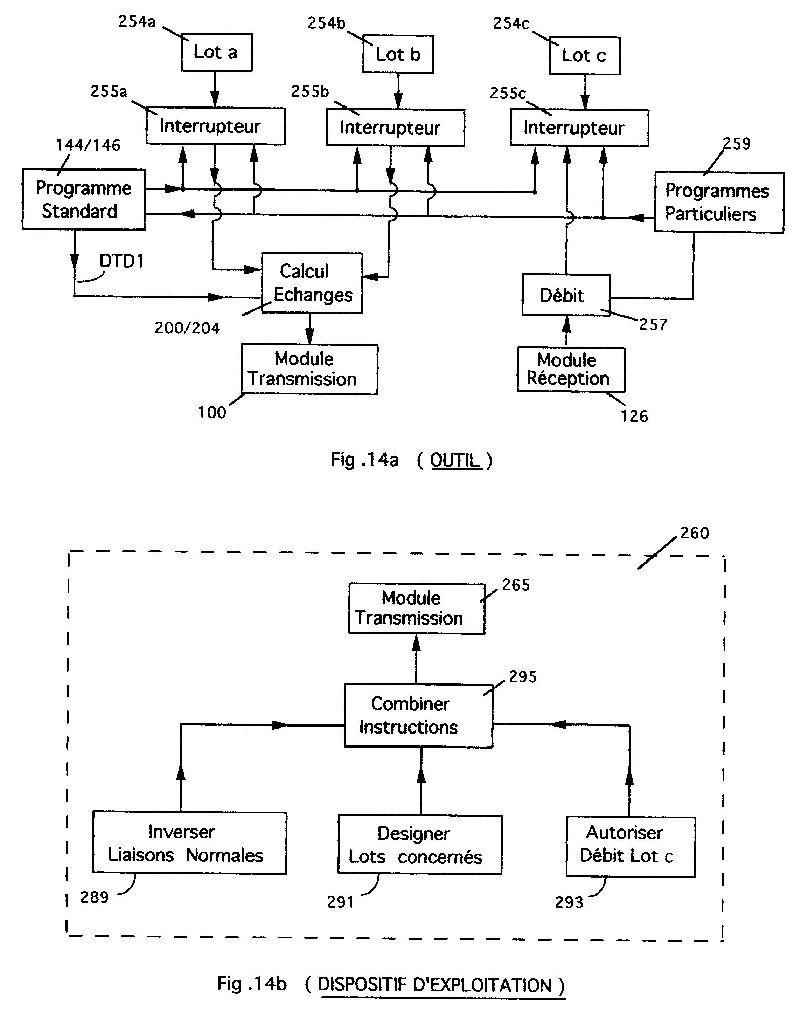

Les figures 14a et 14b représentent les particularités d'un ensemble formé par un outil informatique de communication selon l'invention et par son dispositif d'exploitation, lequel est un microordinateur de poche adapté à cet effet et, pour ce faire, pourvu à la fois d'organes émetteur et récepteur compatibles et de logiciels de gestion adéquats. Cet ensemble permet de conformer un outil informatique selon l'invention, afin de le rendre capable de remplir plusieurs fonctions différentes.

Selon la figure 14a, les mémoires 254 des données (personnelles généralement et acquises, le cas échéant) comportent, à titre d'exemple non limitatif, trois lots a, b, c de données. Le premier lot a est stocké dans la zône de mémoire 254a et classé "Normalement Confidentiel". Il est constitué par des données descriptives diverses et destiné à des échanges avec des interlocuteurs particuliers. Le deuxième lot b est stocké dans la zône de mémoire 254b et classé "Normalement Disponible". Il est constitué de données semblables aux précédentes et est destiné à des échanges de données avec toute personne intéressée. Le troisième lot c est stocké dans la zône de mémoire 254c et classé "Normalement Confidentiel". Il est constitué par des unités téléphoniques préachetées, destinées à être débitées à l'occasion de l'insertion de l'outil dans un système téléphonique adéquat. Les mémoires 254a-254b sont reliées à l'étage de calcul 200 de la figure 10a par des interrupteurs 255a et 255b. La mémoire 254c est reliée par un interrupteur 255c à un étage logique de commande de débit 257. Ces trois interrupteurs 255 a,b,c sont placés sous le contrôle du programme standard de copies réciproques inclus dans le logiciel de gestion 146 du micro-contrôleur 144. Dans ces conditions, sous l'action de ce programme standard, les deux interrupteurs 255a et 255c, respectivement reliés aux zones de mémoires 254a et 254c contenant des données classées "Normalement Confidentielles", sont en permanence à l'état bloqué et, au contraire, l'interrupteur 255b relié à la zône de mémoire 255b contenant des données classées "Normalement Disponibles", est en permanence à l'état passant. Il en résulte que, en l'absence de toute instruction explicite contraire, seul le lot b des données stockées en 254b peut participer aux opérations de copies réciproques de données décrites plus haut. Dans ce cas, le programme standard provoque la production par le micro-contrôleur 144 de l'instruction DTD1 appliquée à l'étage de calcul 200 (voir Fig.10a). Ces trois interrupteurs 255 a,b,c sont également placés sous le contrôle de programmes particuliers de sélection de lots et de fonctions, contenus dans une mémoire 259.

Selon la figure 14b, le logiciel de gestion du dispositif d'exploitation 260 comporte quatre étages complémentaires: l'étage 289 "Inverser Liaisons Normales", l'étage 291 "Désigner Lots Concernés", l'étage 293 "Autoriser Débit Lot c" et l'étage 295 "Combiner Instructions". Cet étage 295 est adapté à produire un message appliqué au module de transmission 265 du dispositif d'exploitation 260. Ce message est reçu par l'outil de communication installé dans ce dispositif et le module de réception 126 de celui-ci l'applique en instruction à exécuter aux programmes particuliers de sélection de lots et de fonctions, contenus en 259.

A titre d'exemples, ces programmes particuliers auront pour première fonction d'inverser les états normaux, passant ou bloqué, imposés par le programme standard, de l'un et/ou de l'autre des trois interrupteurs 255 a,b,c. La deuxième fonction de ces programmes particuliers sera, lorsque l'interrupteur 255a sera de son fait à l'état passant, de laisser le programme standard produire l'instruction DTD1 qui fait démarrer tout échange des données et, de la sorte, d'impliquer dans un tel échange le lot a de données stockées en 254a qui sont classées "Normalement Confidentielles" mais rendues exceptionnellement disponibles. La troisième fonction sera de rendre Non Disponibles pour un moment le lot b de données classées "Normalement Disponibles", stocké en 254b.

La quatrième fonction des programmes particuliers stockés en 259 est de transformer un outil de communication directe entre particuliers selon l'invention, en un instrument de paiement. Dans ce cas, les données mémorisées en 254a et 254b sont interdites d'échange et les données mémorisées en 254c, autorisées de débit. A cet effet, les interrupteurs 255a-255b sont bloqués et l'interrupteur 255c rendu passant. De son côté, l'étage de commande de débit 257 est rendu actif. Dans ces conditions, lorsque l'outil de communication est programmé pour être un instrument de paiement d'une communication téléphonique, son module de réception 126 recevra du système téléphonique concerné, des instructions de débit des unités téléphoniques contenues dans la zône de mémoire 254c. Ces instructions sont mises en oeuvre par le programme de débit contenu dans la mémoire 257.

L'invention n'est pas limitée aux formes de réalisation décrites.

Les présentations des différents étages fonctionnels des logiciels de l'outil de communication selon l'invention, ont été faites à titre explicatif et ne représentent bien entendu pas les formes de réalisations pratiques de ces étages. Les organes de couplage entre deux outils contigus ou entre un outil et son dispositif d'exploitation, peuvent être de types divers, électro-mécanique, inductif, capacitif, acoustique ou optique. Dans le cas d'organes électro-mécaniques de couplage, l'étage d'entrée d'un organe émetteur et l'étage de sortie d'un organe récepteur, sont réduits à de simples liaisons électriques.

Les mémoires des données personnelles comprendront de préférence deux zônes, l'une non modifiable, chargée par le constructeur et contenant les données stables propres au titulaire de l'outil (identité ...) et l'autre modifiable, à la disposition de l'opérateur, grâce au dispositif d'exploitation et/ou à un système informatique extérieur.

Quant à la batterie rechargeable de l'outil, elle peut être remplacée par une pile malgré l'inconvénient de renouvellement périodique qu'un tel élément impose. Dans ce cas, les plots conducteurs extérieurs de l'outil et les contacts souples du dispositif d'exploitation, seront supprimés.

Les applications évoquées ci-dessus de l'outil informatique de communication selon l'invention, sont pas limitées aux cartes de visite intelligentes présentées ni à de telles cartes adaptées à constituer également un instrument de paiement de communications téléphoniques. Les besoins du marché se chargeront d'étendre ces applications.

## Revendications

1. Outil informatique (10) de communication directe entre deux particuliers, adapté à être couplé à un autre outil du même genre, comprenant:
- un corps relativement rigide à deux faces principales;
- une source d'énergie électrique (20);
- un micro-contrôleur (144) et des mémoires;
- des logiciels d'exploitation et de gestion;
- un couple d'organes respectivement émetteur (14) et récepteur (16) de signaux;
- un activateur manuel (12);
- caractérisé en ce que, afin de permettre un échange de données par copies réciproques,
- les organes (14-16) émetteur et récepteur de signaux sont disposés sur la même face principale de l'outil (10), de façon qu'une double liaison puisse être établie entre deux outils couplés;
- l'outil (10) comprend une mémoire des données personnelles (154) et une mémoire des données acquises (156);
- le logiciel de gestion (146) comprend des moyens pour copier les données personnelles d'un outil dans la mémoire des données acquises de l'autre.

2. Outil informatique selon la revendication 1, caractérisé en ce que le logiciel de gestion comporte des moyens pour déterminer la faisabilité de l'opération qui comprennent:
- des moyens (150-152) pour déterminer les volumes occupés dans les mémoires des données personnelles et les volumes disponibles dans les mémoires des données acquises;
- des moyens (160) pour produire un signal de faisabilité de l'opération lorsque les volumes disponibles dans les mémoires des données acquises des outils sont supérieurs aux volumes de mémoire occupés par les données personnelles à copier;
- des moyens (106-107-108) pour déclencher l'opération de copies réciproques en réponse à ce signal de faisabilité.

3. Outil informatique selon la revendication 2, caractérisé en ce que:
- la mémoire (158) des logiciels de gestion contient les caractéristiques fonctionnelles de l'outil;
- lesdits moyens pour déterminer la faisabilité de l'opération comporte de plus:
- des moyens (160) pour déterminer le niveau commun de compatibilité entre les caractéristiques fonctionnelles de deux outils couplés;
- des moyens (161) pour produire un signal de faisabilité générale (SFG) incluant un protocole de communication déduit dudit niveau de compatibilité, lorsqu'à la fois un tel niveau existe et que les volumes disponibles dans les mémoires des données acquises sont suffisants pour permettre les échanges de données envisagés;
- des moyens (106-107-108) pour déclencher l'opération de copies réciproques, en réponse à ce signal de faisabilité générale (SFG).

4. Outil informatique selon l'une des revendications précédentes, comportant au moins un générateur de signal sensible (24), sonore et/ou lumineux, dont le logiciel de gestion comprend:
- des moyens (176) pour commander la production d'au moins un signal sensible, sonore et/ou lumineux, déterminé lorsque l'opération d'échange de données par copies réciproques a été effectuée;
- des moyens (162) pour commander la production d'un autre signal sensible déterminé lorsque la faisabilité de l'opération n'a pas pu être constatée.

5. Outil informatique selon la revendication 4, adapté à effectuer un échange de données entre plus de deux particuliers, caractérisé en ce qu'il comprend:
- sur chaque face principale, un activateur manuel (42-52) et un couple d'organes émetteur (44-54) et récepteur (46-56) de signaux, lesdits organes étant disposés de façon que, dans un empilement d'outils, une double liaison puisse être établie entre toute paire d'outils contigus;
- une mémoire des données en transit (212) associée à la mémoire des données acquises (256);
- des moyens (62) pour mettre l'outil en état de fonctionner un moment, en réponse à une action manuelle exercée sur au moins l'un des activateurs (42-52);
- des faces principales respectivement appelées recto et verso afin que, dans un empilement ordonné d'outils, le recto accessible soit celui du premier outil de l'empilement et le verso accessible, celui du dernier, l'activateur du premier outil étant adapté à déclencher la mise en oeuvre des moyens pour déterminer la faisabilité de l'opération.

6. Outil informatique selon la revendication 4, adapté à effectuer un échange de données entre plus de deux particuliers, caractérisé en ce qu'il comprend:
- un activateur manuel (42) et un couple d'organes émetteur (44) et récepteur (46) de signaux sur une face principale et seulement un couple d'organes émetteur (54) et récepteur (56) identiques sur l'autre, les deux couples étant disposés de telle façon que, dans un empilement d'outils, une double liaison puisse être établie entre toute paire d'outils contigus;
- des moyens (28) pour mettre l'outil en état de fonctionner un moment, en réponse à une action manuelle sur son activateur (42);
- une mémoire des données en transit (212) associée à la mémoire des données personnelles (254);
- des moyens (127-129), compris dans le logiciel de gestion (146), intervenant, au cours d'une étape préliminaire à tout autre opération, pour affecter des rangs, premier et dernier respectivement, aux outils extrêmes (A-B) de l'empilement, lorsque les activateurs manuels (42) de ces outils extrêmes (A-B) sont accessibles et placés à l'état actif, afin que l'activateur du premier outil puisse opérer comme un activateur de recto accessible et, de ce fait, déclencher la mise en oeuvre des moyens pour démarrer la première étape de l'opération d'échange de données envisagée et l'activateur du dernier outil puisse opérer comme un activateur de verso accessible et, de ce fait, intervenir en tant que tel dans cette opération.

7. Outil informatique d'échange de données selon l'une des revendications 5 ou 6, caractérisé en ce que:
- sa mémoire des données personnelles (254) contient des informations générales, notamment relatives au lieu de l'opération;
- son logiciel de gestion comprend:
- des moyens pour effacer le contenu de la mémoire des données acquises (256) après la fin de l'opération;
- des moyens pour rendre accessibles sans conditions les contenus de ses mémoires de données personnelles (254) et de données acquises (256).

8. Ensemble informatique formé par un outil de communication (10-40) selon l'une des revendications 1 à 6 et par un microordinateur de poche (260) adapté à constituer un dispositif d'exploitation de cet outil, caractérisé en ce que:
- les mémoires (254 a,b,c) dudit outil informatique (10-40) comprennent des lots de données respectivement identifiés par des appellations déterminées;
- le logiciel de gestion (146) de cet outil comporte des programmes d'application particuliers (259), respectivement identifiés par d'autres appellations déterminées;
- le logiciel de gestion (288) du microordinateur (260) comprend des moyens (289-291-293-295) pour affecter l'un et/ou l'autre de ces programmes d'application particuliers à l'un et/ou l'autre desdits lots de données afin de lui ou de leur permettre de participer à l'exécution de fonctions particulières (257), en relation avec un ou plusieurs autres outils semblables ou avec un système informatique d'exploitation extérieur, adapté à cet effet.

9. Ensemble informatique selon la revendication 8, caractérisé en ce que l'outil (10-40) étant notamment destiné à être couplé à des outils semblables,
- les mémoires (254) des données de l'outil comportent des lots de données classés en deux catégories, à savoir, "Normalement Disponibles" et "Normalement Confidentiels";
- les programmes d'application particuliers (259) du logiciel de gestion (146) de l'outil sont des programmes de changement temporaire de catégories qui comprennent des moyens pour interdire de copie des lots de données classés "Normalement Disponibles" et des moyens pour autoriser de copie des lots de données classés "Normalement Confidentiels";
- le logiciel de gestion (288) du microordinateur d'exploitation (260) comprend des moyens pour affecter l'un et/ou l'autre de ces programmes de changement de catégories à l'un et/ou l'autre de ces lots de données.

10. Outil informatique de communication directe selon l'une des revendications 1 à 7, caractérisé en ce qu'il comporte:
- un module de transmission (100), fonctionnellement disposé entre une mémoire de données (102) et l'étage d'entrée (104) d'un organe émetteur (14-44-46), ce module comprenant:
(1) un étage logique (106), opérant en réponse à des signaux de déclenchement (SDE ou STS) pour appeler les données à communiquer;
(2) un étage logique (108) pour élaborer les trames formatées du message à transmettre et pour les appliquer en signal de commande à l'étage d'entrée (104) d'un organe émetteur;
- ledit message étant une trame ou une suite de trames destinées à circuler sur un bus de communication, chaque trame ayant une longueur maximale donnée et comprenant des champs normalisés de début (114) et de fin (116) de trame, un champ de données (118), un champ (122) d'identification de la nature des données du message et un champ indicateur (124) de la position de la trame dans le message;
- un module de réception (126), fonctionnellement disposé entre l'étage de sortie (140) d'un organe récepteur (16-46-56), reproduisant le message transmis par le module de transmission (100) d'un outil couplé, et des étages (142) d'exploitation de ce message, ce module de réception comprenant:
(1) une mémoire-tampon de réception (128) pour mémoriser un moment au moins la dernière trame du message ainsi reproduit;
(2) un étage logique (136) pour analyser le champ d'identification (122) du message, coopérant avec un étage d'aiguillage (138) afin de le diriger en conséquence vers un étage d'exploitation déterminé (142).

11. Outil informatique de communication directe selon la revendication 10, caractérisé en ce que, pour des raisons de sécurité de communication,
- le module de transmission (100), produit des messages dont les trames comportent un champ (120) de contrôle de bonne réception et comprend:
(1) des moyens (107-108-109)pour retransmettre la dernière trame émise, en réponse à une demande de retransmission de trame (DRT);
(2) des moyens (110) opérant en réponse à un signal de trame correcte (STC) ou incorrecte (STI), pour produire une trame formatée à transmettre constituant un message d'acquittement positif (MAP) ou négatif (MAN);
(3) des moyens (111) pour produire une demande de retransmission de trame (DRT) au cas où un message d'acquittement positif ou négatif n'aurait pas été produit dans un délai déterminé;
- le module de réception (126) comprend:
(1) des moyens (130) pour calculer le champ de contrôle de chaque trame du message reçu;
(2) des moyens (132) pour comparer l'identité de ce champ calculé et celle du champ de contrôle effectivement reçu et pour produire en conséquence un signal de trame correcte (STC) ou incorrecte (STI);
(3) des moyens (134), opérant en réponse au signal de trame correcte (STC), pour transmettre la trame en question à l'étage d'identification (136) et à l'étage d'aiguillage (138);
(4) des moyens (131) pour filtrer les trames des messages de données à recopier et des messages d'acquittement, pour que les moyens (110) de production d'un message d'acquittement opèrent seulement dans le cas où la trame correcte appartient à un message de données à recopier;
(5) des moyens (143) pour interpréter les messages d'acquittement et, à cet effet, produire:
- en réponse à un message d'acquittement positif (MAP), un signal (STS) de commande d'appel de la trame suivante, appliqué en commande à l'étage d'appel de données (106) du module de transmission (100),
- en réponse à un message d'acquittement négatif (MAN), un signal (DRT) de demande de retransmission de trame, appliqué en commande à l'étage logique de retransmission (109) du module de transmission (100);
(6) un étage de comptage (133), adapté à être remis à zéro par les signaux d'appel de trame suivante (STS), pour compter le nombre de signaux successifs de commande de retransmission de trame (DRT) et pour produire un signal de non-faisabilité (SNF), appliqué en commande au générateur de signal sensible (24-58-59), au cas où le nombre compté serait supérieur à un seuil déterminé.

12. Outil informatique de communication directe selon les revendications 4 et 10, destiné à être couplé à un outil compatible en vue d'un échange de données personnelles, caractérisé en ce que:
- le module de transmission (100), en réponse à un signal de déclenchement extérieur (SDE) constitué par un signal de faisabilité générale (SFG), sélectionne comme mémoire (102) des données à transmettre, la mémoire des données personnelles disponibles (154b) puis opère en conformité avec le protocole de communication commun défini par une donnée Cc incluse dans ce signal (SFG), et produit les trames formatées d'un message de données à recopier, appliqué en signal de commande à l'étage d'entrée (104) de l'organe émetteur;
- en ce que le logiciel de gestion comporte un module de traitement qui comprend:
(1) des moyens pour appliquer à la mémoire des données en transit (170) tout message à recopier, identifié comme tel par l'étage d'identification (136) du module de réception (126);
(2) un étage logique (172) pour reconnaître la fin du message reçu et pour produire en conséquence une instruction de chargement (CDA) de la mémoire des données acquises (156);
(3) un étage logique (174), opérant en réponse à cette instruction de chargement (CDA), pour reconditionner les données formatées contenues dans la mémoire des données en transit (170) et pour ensuite les transférer dans la mémoire des données acquises (156), ce transfert étant réel ou virtuel selon que les mémoires concernées sont différentes par leur localisation ou par leur qualification;
(4) un étage logique (176) pour analyser les messages reçus afin de produire un signal de fin de réception (SFR) et pour appliquer ce signal en commande au générateur de signal sensible (24), afin de signifier la bonne fin de l'opération.

13. Outil informatique de communication directe entre plusieurs particuliers selon une combinaison des revendications 5 ou 6 et de la revendication 10, caractérisé en ce que les moyens pour vérifier la faisabilité d'une opération d'échange de données par copies réciproques multiples, entre les outils préalablement mis en état de marche d'un empilement, comprennent:
- des premiers moyens mis en oeuvre au cours d'une procédure de test descendant incluant:
(1) un étage logique (200), opérant en réponse à un signal de déclenchement de test descendant (DTD) pour déterminer et appliquer à une mémoire de travail (202): le rang n de l'outil dans l'empilement, calculé à partir du rang (n-1) de l'outil précédent, le volume P occupé dans la mémoire des données personnelles (254), le volume Q disponible dans la mémoire des données acquises (256), les données Cₙ de la mémoire des caractéristiques fonctionnelles (258), communes à l'outil et à ceux qui le précèdent, et la somme S₁ des données P de l'outil et des outils disposés au-dessus de lui;
(2) un étage logique (204) pour produire soit un signal de poursuite de test descendant (PTD) lorsqu'une donnée Cₙ est trouvée soit un signal de non-faisabilité (SNF), appliqué en commande du générateur de signal sensible (58-59) lorsqu'aucune caractéristique fonctionnelle commune Cₙ n'apparaît entre l'outil et ceux qui le précèdent dans l'empilement;
(3) le module de transmission (100v), pour appeler les données n, Cₙ et S₁, contenues dans une mémoire de travail (202), pour élaborer un message de test descendant (MTD) incorporant ces données ainsi qu'un signal de déclenchement de test descendant (DTD) et pour l'appliquer en commande à l'étage d'entrée (104v) de l'émetteur de verso (54);
- le signal initial de déclenchement de test descendant (DTD1) étant produit par le micro-contrôleur (144) en réponse à l'état actif de l'activateur de recto (42) et les autres (DTD), par un signal compris dans le message de test descendant (MTD) détecté par le module de réception (126r) couplé à l'étage de sortie (140r) relié à un récepteur de recto (46);
- des seconds moyens mis en oeuvre au cours d'une procédure de test montant incluant:
(1) un étage logique (208), opérant en réponse à un signal de déclenchement de test montant (DTM) et coopérant avec la mémoire de travail (202);
- pour calculer la somme S des données P afférentes à tous les autres outils de l'empilement et pour déterminer si la donnée Q de l'outil est supérieure à cette somme S (Q > S ?),
- pour déterminer et appliquer à la mémoire de travail (202) la somme S₂ des données P de l'outil et des outils disposés en-dessous de lui;
- pour appliquer à la mémoire de travail (202) une donnée Cₘ identifiant le protocole de communication optimal applicable à tous les outils, cette donnée Cₘ étant, dans le cas du dernier outil de l'empilement, déduite des caractéristiques fonctionnelles communes à tous les outils et, dans le cas, des autres outils, transmise en même temps que le signal de déclenchement de test montant (DTM),
- pour produire un signal codé de faisabilité individuelle (SFI) si la condition Q > S est vérifiée et, dans le cas contraire, pour produire un signal codé de non-faisabilité (SNF), tous deux appliqués en signaux de commande à au moins un générateur de signal lumineux (59 a,b);
- le signal initial de déclenchement de test montant (DTM1) étant produit par un étage logique (206) recevant un signal de déclenchement de test descendant (DTD) en même temps que l'état actif de l'activateur de verso (52) et les autres (DTM), par le module de réception (126v) relié au récepteur de verso (56);
(2) le module de transmission (100r), opérant en réponse à un signal de déclenchement constitué par le signal de faisabilité individuelle (SFI), pour appeler les données m, S₂ et Cₘ contenues dans la mémoire de travail (202), pour élaborer un message de test montant (MTM) incorporant ces données et un signal de déclenchement de test montant (DTM), et pour l'appliquer en signal de commande à l'étage d'entrée (104r) de l'organe émetteur de recto (44);
(3) le module de réception (126v), associé à l'organe récepteur de verso (56), pour appliquer à la mémoire de travail (202) les données ( m, Cₘ, S₂) communiquées par les outils disposés au-dessous de lui et pour appliquer à l'étage logique (208), le signal de déclenchement de test montant (DTM), contenus dans le message (MTM) reçu;
(4) un étage logique (210) recevant de l'étage logique (208) un signal de faisabilité individuelle (SFI) en même temps que l'état actif de l'activateur de recto (42), pour produire un signal de faisabilité générale, constituant une instruction initiale de recopie descendante (IRD1).

14. Outil informatique de communication directe entre plusieurs particuliers, selon la revendication 13, caractérisé en ce que, les moyens mis en oeuvre au cours d'un échange général de données, comprennent:
(1) deux mémoires-tampons de réception (211r-211v) respectivement disposées en aval des modules de réception (126r-126v);
(2) deux étages logiques de commutation (213v-213r) à deux entrées et une sortie, l'une des entrées étant reliée à une mémoire de données disponibles (254 b), l'autre entrée reliée à l'une des deux mémoires-tampons de réception (211r-211v) et la sortie reliée l'un des deux modules de transmission (100v-100r);
- l'étage (213) et le module (100) opérant tous deux en réponse à une instruction de recopie (IRD ou IRM) ayant son origine sur une face de l'outil ception (211r-211v) et la sortie reliée l'un des deux modules de transmission (100v-100r);
- chaque étage (213v-213r) et chaque module (100v-100r) opérant en réponse à une instruction de recopie (IRD ou IRM) ayant son origine sur une face de l'outil pour appeler les données contenues dans la mémoire (254) des données personnelles de l'outil,
- chaque module de transmission (100v-100r) élaborant ensuite en accord avec le protocole de communication optimal commun à tous les outils, identifié par la donnée Cₘ, ce protocole étant contenu dans une mémoire permanente (258) et la donnée Cₘ, dans la mémoire de travail (202), un message à transmettre (MRD ou MRM) contenant ces données et pour appliquer ce message à l'étage d'entrée (104v-104r) de l'émetteur (54-44) disposé sur l'autre face;
(3) le module de réception (126r-126v) du récepteur (56-46) d'une face,
- pour détecter le champ d'identification (122) de la suite des messages à recopier transmis par les outils qui le précèdent dans le sens de la recopie,
- pour aiguiller ces messages, d'une part, vers la mémoire des données en transit (212) et, d'autre part, vers la mémoire-tampon (211r-211v) concernée, adaptée à mémoriser successivement chacune des trames des messages reçus, reliée à l'une des deux entrées de l'étage logique de commutation (213v-213r), disposé en amont du module de transmission (100v-100r) associé à l'organe émetteur de l'autre face (54-44);
(4) un étage logique (214), relié d'une part, aux deux modules de réception (126r-126v) des récepteurs (56-46) de verso ou de recto et, d'autre part, à la mémoire de travail (202) contenant les données (m, n) de rang d'outils;
- pour déterminer et mémoriser un moment le nombre de messages à recevoir au cours d'une procédure de recopie descendante ou montante, à partir des nombres (n-1) ou (m-n) d'outils respectivement disposés au-dessus puis au-dessous de lui,
- pour détecter la fin du dernier message de la suite des messages à recopier reçus et pour produire en conséquence à l'intention du module de transmission (100), ladite instruction de recopie descendante (IRD) ou montante (IRM),
- l'instruction initiale de recopie descendante (IRD1) étant ledit signal de faisabilité générale (SFG) et l'instruction initiale de recopie montante (IRM1), une instruction de recopie descendante combinée dans un étage logi-que (216) à l'état actif de l'activateur de verso (52);
- les instructions de recopie descendante et montante (IRD-IRM) étant respectivement appliquées aux étages logiques de commutation (213v-213r) et aux deux modules de transmission (100v-100r);
(5) un étage logique (218) pour produire une instruction initiale de chargement (CDA1) de la mémoire des données acquises (256), opérant en réponse à une instruction de recopie montante (IRM), délivrée par l'étage logique de détection (214), combinée à l'état actif de l'activateur de recto (42);
- ladite instruction initiale de chargement (CDA1) étant également appliquée en signal de commande à l'étage d'entrée (104v) de l'émetteur de verso (54) afin d'être relayée vers les autres outils;
(6) un étage logique (220), opérant en réponse à cette instruction de chargement (CDA) pour reconditionner les données contenues dans la mémoire des données en transit (212) et pour ensuite les transférer, d'une manière réelle ou virtuelle, dans la mémoire des données acquises (256);
(7) un étage logique (222) pour détecter cette instruction de chargement (CDA) et pour la combiner avec l'état actif de l'activateur de verso (52) afin de la transformer en une instruction de validation de l'échange (IVE) effectué, appliquée en commande au générateur de signal sensible (58-59) pour signifier la bonne fin de l'opération.

## Patentansprüche

1. Datenverarbeitungsvorrichtung (10) zur direkten Kommunikation zwischen zwei Einzelpersonen, geeignet für die Kupplung an eine andere Vorrichtung desselben Typs, umfassend:
- ein relativ starres Gehäuse mit zwei Hauptflächen;
- eine Quelle elektrischer Energie (20);
- ein Mikrosteuerbaustein (144) und Speicher;
- Betriebssystem- und Verwaltungssoftware;
- ein Paar Bauteile, jeweils einen Sender (14) und einen Empfänger (16) von Signalen;
- ein manuellen Auslöser (12);
- dadurch gekennzeichnet, daß, um einen Datenaustausch über gegenseitiges Kopieren zu ermöglichen,
- die Bauteile (14-16), Sender beziehungsweise Empfänger von Signalen, auf derselben Hauptfläche der Vorrichtung (10) angeordnet sind, wodurch zwischen zwei gekuppelten Vorrichtungen eine doppelte Verbindung hergestellt werden kann;
- die Vorrichtung (10) einen Speicher für persönliche Daten (154) und einen Speicher für erfasste Daten (156);
- die Verwaltungssoftware (146) umfasst Mittel zum Kopieren der persönlichen Daten einer Vorrichtung in den Speicher für erfasste Daten der anderen Vorrichtung.

2. Datenvearbeitungsvorrichtung gemäß Anspruch 1, gekennzeichnet dadurch, daß die Verwaltungssoftware Mittel für die Bestimmung der Durchführbarkeit des Vorgangs aufweist, welche umfassen:
- Mittel (150-152) für die Bestimmung des in den Speichern für persönliche Daten eingenommenen Raums und des in den Speichern für erfasste Daten verfügbaren Raums;
- Mittel (160) für das Liefern eines Durchführbarkeitssignals für den Vorgang, wenn der in den Speichern für erfasste Daten der Vorrichtung verfügbare Raum größer ist als der von den zu kopierenden persönlichen Daten eingenommene Speicherraum;
- Mittel (106-107-108) für das Auslösen des Vorgangs des gegenseitigen Kopierens in Antwort auf das Durchführbarkeitssignal.

3. Datenvearbeitungsvorrichtung gemäß Anspruch 2, gekennzeichnet dadurch, daß:
- der Speicher (158) der Verwaltungssoftware die funktionellen Merkmale der Vorrichtung enthält;
- die Mittel für die Bestimmung der Durchführbarkeit des Vorgangs weiter aufweisen:
- Mittel (160) für die Bestimmung der den funktionnellen Merkmalen der zwei gekuppelten Vorrichtungen gemeinsamen Kompatibilitätstufe;
- Mittel (161), um ein allgemeines Durchführbarkeitssignal (SFG) einschließlich eines aus der gemeinsamen Kompatibilitätsstufe abgeleiteten Kommunikationsprotokolls, wenn sowohl eine solche Stufe existiert als auch der verfügbare Raum in den Speichern für erfasste Daten für den vorgesehenen Datenaustausch ausreichend ist;
- Mittel (106-107-108) für das Auslösen des Vorgangs des gegenseitigen Kopierens in Antwort auf das Durchführbarkeitssignal (SFG).

4. Datenvearbeitungsvorrichtung gemäß einem der vorgehenden Ansprüche, aufweisend mindestens einen Generator von wahrnehmbaren Signalen (24), tönend und/oder leuchtend, wobei die Verwaltungssoftware umfasst:
- Mittel (176) zum Befehlen der Erzeugung mindestens eines bestimmten wahrnehmbaren Signals (24), tönend und/oder leuchtend, wenn der Vorgang des Datenaustauschs über gegenseitiges Kopieren durchgeführt wurde;
- Mittel (162) zum Befehlen der Erzeugung eines anderen bestimmten wahrnehmbaren Signals wenn die Durchführbarkeit des Vorgangs nicht festgestellt werden konnte.

5. Datenvearbeitungsvorrichtung gemäß Anspruch 4, geeignet für das Durchführen eines Datenaustauschs zwischen mehr als zwei Einzelpersonen, gekennzeichnet dadurch, daß diese umfasst:
- einen manuellen Auslöser (42-52) und ein Paar Bauteile für das Senden (44-54) und Empfangen (46-56) von Signalen auf jeder Hauptseite, wobei diese Bauteile so angeordnet sind, daß in einem Stapel von Vorrichtungen eine doppelte Verbindung zwischen jedem benachbarten Vorrichtungenspaar hergestellt werden kann;
- einen mit dem Speicher für erfasste Daten (256) verbunden Speicher für Transitdaten (212);
- Mittel (62) für die zeitweilige Inbetriebnahme der Vorrichtung in Antwort auf ein manuelles Einwirken auf mindestens einen der Auslöser (42-52);
- Hauptseiten, welche Vorder- beziehungsweise Rückseite genannt werden, so daß in einem geordneten Stapel von Vorrichtungen die zugängliche Vorderseite jene der ersten Vorrichtung des Stapels ist und und die zugängliche Rückseite jene der letzten Vorrichtung ist, wobei der Auslöser der ersten Vorrichtung dafür geeignet ist, den Einsatz der Mittel zur Bestimmung der Durchführbarkeit des Vorganges auszulösen.

6. Datenvearbeitungsvorrichtung gemäß Anspruch 4, geeignet für das Durchführen eines Datenaustauschs zwischen mehr als zwei Einzelpersonen, gekennzeichnet dadurch, daß diese umfasst:
- einen manuellen Auslöser (42) und ein Paar Bauteile für das Senden (44) und Empfangen (46) von Signalen auf einer Hauptseite, und nur ein Paar identischer Bauteile für das Senden (54) und Empfangen (56) von Signalen auf der anderen Hauptseite, wobei die beiden Bauteilpaare so angeordnet sind, daß in einem Stapel von Vorrichtungen, eine doppelte Verbindung zwischen jedem benachbarten Paar Vorrichtungen hergestellt werden kann;
- Mittel (28) für die zeitweilige Inbetriebnahme der Vorrichtung in Antwort auf ein manuelles Einwirken auf mindestens einen der Auslöser (42);
- einen mit dem Speicher für erfasste Daten (256) verbundenen Speicher für Transitdaten (212);
- in der Verwaltungssoftware (146) integrierte Mittel (127-129), welche während einer Vorstufe jeden anderen Vorgangs eingreifen, um den endständigen Vorrichtungen (A-B) des Stapels einen ersten beziehungsweise letzten Rang zuzuordnen, wenn die manuellen Auslöser (42) dieser endständigen Vorrichtungen (A-B) zugänglich sind und sich im aktiven Zustand befinden, so daß der Auslöser der ersten Vorrichtung wie ein zugänglicher Auslöser der Vorderseite funktionieren und dadurch den Einsatz des Mittel für das Starten der ersten Stufe des vorgesehenen Datenaustauschvorgangs auslösen kann und der Auslöser der letzten Vorrichtung wie ein zugänglicher Auslöser der Rückseite funktionieren und dadurch als solcher in diesen Vorgang eingreifen kann.

7. Datenverarbeitungvorrichtung für den Datenaustausch gemäß einem der Ansprüche 5 oder 6, gekennzeichnet dadurch, daß
- dessen Speicher für persönliche Daten (254) allgemeine Information enthält, vor allem den Ort des Vorgangs betreffend;
- dessen Verwaltungssoftware umfaßt:
- Mittel für das Löschen des Inhalts des Speichers für erfasste Daten (256) nach Abschluß des Vorgangs;
- Mittel, um die Inhalte der Speicher für persönliche Daten (254) und für erfasste Daten (256) bedingungslos zugänglich zu machen.

8. Datenverarbeitungseinheit, gebildet von einer Kommunikationsvorrichtung (10-40) gemäß einem der Ansprüche 1 bis 6 und von einem Taschenmikrocomputer (260), welcher dafür geeignet ist, eine Betriebsvorrichtung dieser Vorrichtung zu sein, gekennzeichnet dadurch, daß:
- die Speicher (154 a,b,c) der Datenverarbeitungsvorrichtung (10-40) jeweils durch bestimmte Bezeichnungen identifizierte Datengruppen umfassen;
- die Verwaltungssoftware (146) der Vorrichtung besondere Anwendungssoftware (259) aufweist, welche jeweils durch andere bestimmte Bezeichnungen identifiziert werden;
- die Verwaltungssoftware (288) des Mikrocomputers (260) Mittel (289-291-293-295), für die Zuweisung eines oder des anderen dieser besondere Anwendungssoftware der einen oder anderen der Datengruppen, wodurch jener oder jenen ermöglicht wird, in Verbindung mit einem oder mehreren anderen ähnlichen Vorrichtungen oder mit einem externen, dafür geeigneten Datenverarbeitungsbetriebssystem an der Durchführung von besonderen Funktionen (257) teilzunehmen.

9. Datenverarbeitungseinheit gemäß Anspruch 8, gekennzeichnet dadurch, daß die Vorrichtung (10-40) vor allem dafür vorgesehen ist, an ähnliche Vorrichtungen gekuppelt zu werden,
- die Speicher (254) für die Daten der Vorrichtung Datengruppen enthalten, welche in zwei Kategorien eingeteilt sind, nämlich "normal zugänglich" und "normal vertraulich";
- die besondere Anwendungssoftware (159) der Verwaltungssoftware (146) der Vorrichtung Programme für den zeitlich begrenzten Wechsel der Kategorie sind, welche Mittel für das Kopierverbot von Datengruppen der Kategorie "normal zugänglich" und Mittel für die Kopiererlaubnis von Datengruppen der Kategorie "normal vertraulich" umfassen;
- die Verwaltungssoftware (288) des Betriebsmikrocomputers (260) Mittel für die Zuweisung des einen und/oder anderen Programms für den Kategoriewechsel an eine und/oder andere dieser Datengruppen umfasst.

10. Datenverarbeitungsvorrichtung für die direkte Kommunikation gemäß einer der Ansprüche 1 bis 7, gekennzeichnet dadurch, daß diese aufweist:
- ein Übertragungsmodul (100), welches funktional zwischen einem Datenspeicher (102) und der Eingangsstufe (104) eines Sendebauteils (14-44-46) angeordnet ist, wobei dieses Modul umfasst:
(1) eine logische Stufe (106) welches in Antwort auf Auslösesignale (SDE oder STS) die zu kommunizierenden Daten aufruft;
(2) eine logische Stufe (108) für das Ausarbeiten von formatierten Frame der zu übertragenden Nachricht und für deren Lieferung als Befehlssignal an die Eingangsstufe (104) eines Sendebauteils;
- wobei die Nachricht ein Frame oder eine Serie von Frames ist, welche dafür vorgesehen sind, auf einem Kommunikationsbus übertragen zu werden, wobei jedes Frame eine gegebene maximale Länge hat und normalisierte Frameanfangs- (114) und Frameendfelder (116), ein Datenfeld (118), ein Identifizierungsfeld (122) der Datenart der Nachricht und ein Angabefeld (124) der Position des Frames in der Nachricht umfasst;
- ein Empfangsmodul (126), welches funktional zwischen der Ausgangsstufe (140) eines Empfangbauteils (16-46-56), welches die von dem Übertragungsmodul (100) einer gekuppelten Vorrichtung übertragene Nachricht wiedergibt, und den Auswertungsstufen (142) dieser Nachricht angeordnet ist, wobei das Empfangsmodul umfasst:
(1) einen Empfangspufferspeicher (128) zum zumindest zeitweiligen Speichern des letzten Frames der derart wiedergegebenen Nachricht;
(2) eine logische Stufe (136) für die Analyse des Identifizierungsfeldes (122) der Nachricht, welche mit einer Umleitstufe (138) zusammenarbeitet, um diese entsprechend an eine bestimmtes Auswertungsstufe (142) zu leiten.

11. Datenverarbeitungsvorrichtung für die direkte Kommunikation gemäß Anspruch 10, gekennzeichnet dadurch, daß, aus Gründen der Kommunikationssicherheit
- das Übertragungsmodul (100) Nachrichten liefert, deren Frames ein Kontrollfeld für den guten Empfang aufweisen und das umfasst:
(1) Mittel (107-108-109) für die Wiederübertragung des letzten gesendeten Frames in Antwort auf eine Anfrage auf Wiederübertragung (DRT);
(2) Mittel (110), welche in Antwort auf ein Signal eines korrekten Frames (STC) oder Signal eines inkorrekten Frames (STI) wirksam sind, um ein zu übertragendes formatiertes Frame zu liefern, welches eine positive Ausführungsnachricht (MAP) oder eine negative Ausführungsnachricht (MAN) darstellt;
(3) Mittel (111), um eine Anfrage auf Wiederübertragung des Frames (DRT), wenn innerhalb einer bestimmten Zeitspanne eine positive (MAP) oder negative Ausführungsnachricht (MAN) nicht geliefert worden ist;
- das Empfangsmodul (126) umfasst:
(1) Mittel (130) für die Berechnung des Kontrollfeldes für jedes Frame der empfangenen Nachricht;
(2) Mittel (132) für das Vergleichen der Identität dieses berechneten Feldes und der des wirklich erhaltenen Kontrollfeldes und zum entsprechenden Liefern eines Signal eines korrekten Frames (STC) oder Signal eines inkorrekten Frames (STI);
(3) Mittel (134), welche in Antwort auf ein Signal eines korrekten Frames (STC) wirksam sind, für das Weiterleiten des Frames als Frage an die Identifizierungsstufe (136) und an die Umleitungsstufe (138);
(4) Mittel (131) für das Filtrieren der Frames der Nachrichten der zu kopierenden Daten und der Ausführungsnachrichten, damit die Mittel (110) zur Lieferung einer Ausführungsnachricht nur dann wirksam sind, wenn der korrekte Frame zu einer zu kopierenden Nachricht gehört;
(5) Mittel (143) für das Interpretieren der Ausführungsnachrichten und zu diesem Zweck für die Lieferung von:
- einem als Befehl an die Datenaufrufstufe (106) des Übertragungsmoduls (100) geleiteten Befehlssignals zum Aufruf des folgenden Frames (STS) in Antwort auf ein positives Ausführungssignal (MAP);
- einem als Befehl an die logische Übertragungstufe (109) des Übertragungsmoduls (100) geleiteten Befehlssignals zur Wiederübertragung des Frames (DRT) in Antwort auf ein negatives Ausführungssignal (MAN);
(6) eine Zählstufe (133), welche geeignet ist, um durch die Aufrufssignale des folgenden Frames (STS) auf Null gestellt zu werden, um die Anzahl aufeinanderfolgender Befehlssignale zur Wiederübertragung des Frames (DRT) zu zählen und um ein Nichtdurchführbarkeitssignal (SNF) zu liefern, welches als Befehl an den Generator von wahrnehmbaren Signale (24-58-59) geleitet wird, wenn die gezählte Anzahl eine bestimmte Schwelle überschreitet.

12. Datenverarbeitungsvorrichtung für die direkte Kommunikation gemäß den Ansprüchen 4 und 10, welche dafür vorgesehen ist, für den Austausch von persönlichen Daten mit einer anderen kompatiblen Vorrichtung gekuppelt zu werden, gekennzeichnet dadurch, daß:
- das Übertragungsmodul (100) in Antwort auf ein externes Auslösesignal (SDE), das aus einem allgemeinen Durchführbarkeitssignal (SFG) besteht, als Speicher (102) der zu übertragenden Daten den Speicher der zugänglichen persönlichen Daten (154b) auswählt und dann gemäß der durch das in dem Signal (SFG) enthaltene Größe Cc definierten gemeinsamen Kommunikationsprotokoll wirkt und die formatierten Frames einer Nachricht von zu kopierenden Daten liefert und als Befehlssignal der Eingangsstufe (104) des Sendebauteils zuleitet;
- dadurch, daß die Verwaltungssoftware ein Verarbeitungsmodul aufweist, welches umfasst:
(1) Mittel für die Zuführung jeder zu kopierenden Nachricht, welche von der Identifizierungsstufe (136) des Empfangsmoduls (126) als solche identifiziert wurde, an den Speicher für Transitdaten (170);
(2) eine logische Stufe (172) für die Enderkennung der erhaltenen Nachricht und zur entsprechenden Lieferung eines Ladebefehls (CDA) für den Speicher für erfasste Daten (156);
(3) eine logische Stufe (174), welche in Antwort auf den Ladebefehl (CDA) wirksam wird, um die formatierten, in dem Speicher für Transitdaten (170) enthaltenen Daten in Form zu bringen und um diese anschließend in den Speicher für erfasste Daten (156) zu überführen, wobei dieser Transfer reell oder virtuell sein kann, je nach dem ob die betroffenen Speicher bezüglich ihres Standorts oder ihrer Qualifizierung verschieden sind;
(4) eine logische Stufe (176) für die Analyse des empfangenen Nachrichten, um ein Empfangsendsignal (SFR) zu liefern und um dieses Signal als Befehl an den Generator von wahrnehmbaren Signalen (24) zu leiten, um das gelungene Ende des Vorgangs anzugeben.

13. Datenverarbeitungsvorrichtung für die direkte Kommunikation zwischen mehreren Privatpersonen gemäß einer Kombination der Ansprüche 5 oder 6 und dem Anspruch 10, gekennzeichnet dadurch, daß die Mittel zur Prüfung der Durchführbarkeit eines Datenaustauschvorgangs durch multiple gegenseitige Kopie zwischen den vorab betriebsbereit in einem Stapel angeordneten Vorrichtungen umfassen:
- erste Mittel, welche während einer absteigenden Testprozedur eingesetzt werden, einschließlich:
(1) eine logische Stufe (200), die in Antwort auf ein Auslösesignal eines absteigenden Tests (DTD) wirksam wird, um den Rang n der Vorrichtung in dem Stapel von dem Rang (n-1) der vorgehenden Vorrichtung ausgehend berechnet, den in dem Speicher für persönliche Daten (254) eingenommenen Raum P, den in dem Speicher für erfasste Daten (256) verfügbare Raum Q, die Daten Cₙ des Speichers für die funktionellen Merkmale (258), welche der Vorrichtung und den vorgehenden Vorrichtungen gemeinsam sind, und die Summe S₁ der Daten P des Vorrichtung und der über jener angeordneten Vorrichtungen, zu bestimmen und einem Arbeitsspeicher (202) zuzuführen;
(2) eine logische Stufe (204), um entweder ein Signal einer Fortführung des absteigenden Tests (PTD) zu liefern, wenn eine Größe Cn gefunden wurde, oder ein Signal der Undurchführbarkeit (SNF) als Befehl an den Generator von wahrnehmbaren Signalen (58-59) zu leiten, wenn keine gemeinsame funktionelle Größe Cn zwischen der Vorrichtung und den dieser im Stapel vorausgehenden Vorrichtungen auftritt;
(3) das Übertragungsmodul (100v), um die in einem Arbeitsspeicher (202) befindlichen Daten n, Cn und S₁ aufzurufen, um eine Nachricht eines absteigenden Tests (MTD) zu liefern, die diese Daten sowie ein Auslösesignal eines absteigenden Tests (DTD) enthält und um diese als Befehl an die Eintrittsstufe (104v) des rückwärtigen Senders (54) zu liefern;
- wobei das Anfangsauslösesignal eines absteigenden Tests (DTDI) von dem Mikrosteuerbauteil (144) in Antwort auf den aktiven Zustand des vorderen Auslösers (42) geliefert wird und die anderen (DTD) durch ein in der Nachricht eines absteigenden Tests (MTD) enthaltenes Signal, welches das Empfangsmodul (126r) nachgewiesen wird, das an die Ausgangsstufe (140r) gekuppelt und mit einem vorderen Empfänger (46) verbunden ist;
- zweite Mittel, welche während einer aufsteigenden Testprozedur eingesetzt werden, einschließlich:
(1) eine logische Stufe (208), die in Antwort auf ein Auslösesignal eines aufsteigenden Tests (DTM) wirksam wird und mit dem Arbeitsspeicher (202) zusammenarbeitet;
- um die Summe S der Daten P bezüglich aller anderen Vorrichtungen des Stapels zu berechnen und um zu bestimmen, ob die Größe Q der Vorrichtung größer ist als diese Summe S (Q>S?),
- um die Summe S₂ der Daten P der Vorrichtung und der unter dieser angeordneten Vorrichtungen zu bestimmen und dem Arbeitsspeicher (202) zuzuführen;
- um die Größe Cₘ, welche das optimale, auf alle Vorrichtungen anwendbare Kommunikationsprotokoll angibt, dem Arbeitsspeicher (202) zuzuführen, wobei diese Größe Cₘ im Falle der letzten Vorrichtung des Stapels von den allen Vorrichtungen gemeinsamen funktionalen Kenndaten des Vorrichtungen abgeleitet wird und im Falle des anderen Vorrichtungen, zusammen mit dem Auslösesignal eines aufsteigenden Tests (DTM) weitergeleitet wird;
- um ein kodiertes individuelles Durchführbarkeitssignal (DFI) zu liefern, wenn die Bedingung Q>S wahr ist und, im gegenteiligen Falle, um ein kodiertes Undurchführbarkeitssignal (SNF) zu liefern, welche beide als Befehlssignale an mindestens einen Generator von Lichtsignalen (59 a,b) geleitet werden;
- wobei das Anfangsauslösesignal eines aufsteigenden Tests (DTM1) von einer logischen Stufe (206) geliefert wird, welche ein Auslösesignal für einen absteigenden Test (DTD) gleichzeitig mit dem aktiven Zustand des rückwärtigen Auslösers (52) empfängt und die anderen (DTM) durch das Empfangsmodul (126v) geliefert werden, welches mit dem rückwärtigen Empfänger (56) verbunden ist;
(2) das Übertragungsmodul (100r), das in Antwort auf ein aus einem individuellen Durchführbarkeitssignal (SFI) bestehenden Auslösesignal wirksam wird, um die in dem Arbeitsspeicher (202) befindlichen Daten m, S₂ und Cₘ aufzurufen, um eine Nachricht eines aufsteigenden Tests (MTM) zu liefern, die diese Daten sowie ein Auslösesignal eines aufsteigenden Tests (DTM) enthält und um diese als Befehl der Eintrittsstufe (104r) des vorderen Senders (44) zuzuführen;
(3) das mit dem rückwärtigen Empfängerbauteil (56) verbundene Empfangsmodul (126v), um die von den unter diesem angeordneten Vorrichtungen angegebenen Daten (m, Cm, S2) dem Arbeitsspeicher (202) zuzuführen und um das in der Nachricht (MTM) enthaltene Auslösesignal eines aufsteigenden Tests (DTM) der logischen Stufe zuzuführen;
(4) eine logische Stufe (210), das von dem logischen Niveau (208) ein individuelles Durchführbarkeitssignal (SFI) gleichzeitig mit dem aktiven Zustand des vorderen Auslösers (42) erhält, um ein allgemeines Durchführbarkeitssignal zu liefern, das einen Anfangsbefehl einer absteigenden nochmaligen Kopie (IRD1) darstellt.

14. Datenverarbeitungsvorrichtung für die direkte Kommunikation zwischen mehreren Privatpersonen gemäß Anspruch 13, gekennzeichnet dadurch, daß die während eines allgemeinen Datenaustauschs eingesetzten Mittel umfassen:
(1) zwei Empfangs-Speicherpuffer (211r-211v), welche jeweils vor den Empfangsmodulen (125r-126v) angeodnet sind;
(2) zwei logische Schaltstufen (223v-223r) mit zwei Eingängen und einem Ausgang, wobei einer der Eingänge mit einem Speicher für verfügbare Daten (254b), der andere Eingang mit einem der zwei Empfangs-Speicherpuffer (211r-211v) und der Ausgang mit einem der zwei Übertragungsmodule (100v-100r) verbunden ist;
- die Stufe (213) und das Modul (100), welche beide in Antwort auf einen Befehl einer nochmaligen Kopie (IRD oder IRM), welcher auf einer der Seiten der Empfangsvorrichtung (211r-211v) seinen Ursprung hat, wirksam werden und der Ausgang mit einem der zwei Übertragungsmodule (100v-100r) verbunden ist;
- jede Stufe (213v-213r) und jedes Modul (100v-100r) in Antwort auf einen Befehl einer nochmaligen Kopie (IRD oder IRM), welcher auf einer Seite der Vorrichtung seinen Ursprung hat, wirksam wird, um die in dem Speicher (254) für persönliche Daten der Vorrichtung befindlichen Daten aufzurufen,
- jedes Übertragungsmodul (100v-100r), das anschließend gemäß dem optimalen allen Vorrichtungen gemeinsamen Kommunikationsprotokoll, welcher durch die Größe Cₘ angegeben wird, wobei dieses Protokoll in einem permanenten Speicher (258) und die Größe in dem Arbeitsspeicher (202) enthalten ist, eine zu übertragende Nachricht (MRD oder MRM) ausarbeitet, die diese Daten enthält und um diese Nachricht der Eintrittsstufe (104v-1094r) des auf der anderen Seite befindlichen Senders (54-44) zuzuführen;
(3) das Empfangsmodul (126r-126v) des Empfängers (56-46) einer Seite,
- zum Nachweis des Identifizierungsfeldes (122) der Reihe von nochmals zu kopierenden Nachrichten, welche von den in Richtung der nochmaligen Kopie vorausgehenden Vorrichtungen übertragen wurden,
- zum Umleiten dieser Nachrichten, einerseits zum Speicher für Transitdaten (212), und andererseits zum betreffenden Pufferspeicher (211v-211r), welcher geeignet ist, um nacheinander jedes der Frames der empfangenen Nachrichten zu speichern, und mit einem der beiden Eingänge der logischen Schaltstufe (213v-213r) verbunden ist, welcher vor dem mit dem Sendebauteil (54-44) der anderen Seite verbundenen Übertragungsmodul (100v-100r) angeordnet ist;
(4) eine logische Stufe (214), die einerseits mit den zwei Empfangsmodulen (126r-126v) der vorderen und rückwärtigen Empfänger (56-46) verbunden ist, und andererseits mit dem die Rangdaten (n, m) der Vorrichtungen enthaltenden Arbeitsspeicher (202) verbunden ist;
- um die Anzahl der während der Prozedur der aufsteigenden oder absteigenden nochmaligen Kopie zu empfangener Nachrichten aus der Anzahl (n-1) oder (m-n) Vorrichtungen, welche jeweils über und unter dieser angeordnet sind, zu bestimmen und zeitweilig zu speichern,
- um das Ende der letzten Nachricht der Reihe von empfangenen nochmals zu kopierenden Nachrichten nachzuweisen und um entsprechend für das Übertragungsmodul (100) den Befehl einer aufsteigenden (IRD) oder absteigenden (IRM) nochmaligen Kopie zu liefern,
- wobei der Anfangsbefehl einer absteigenden nochmaligen Kopie (IRD1) das allgemeine Durchführbarkeitssignal (SFG) ist, und der Anfangsbefehl einer absteigenden nochmaligen Kopie (IRM1) der in einer logischen Stufe (216) mit dem aktiven Zustand des rückwärtigen Auslösers (52) kombinierte Befehl einer absteigenden nochmaligen Kopie ist;
- wobei die Befehle einer nochmaligen aufsteigenden oder absteigenden Kopie (IRD-IRM) jeweils den logischen Schaltstufen (213v-213r) und den zwei Übertragungsmodulen (100v-100r) zugeführt werden;
(5) eine logische Stufe (218) um einen ursprünglichen Ladebefehl (CDA1) des Speichers für erfasste Daten (256) zu liefern, welche in Antwort auf einen von der logischen Nachweisstufe (214) gelieferten Befehl einer aufsteigenden nochmaligen Kopie (IRM) kombiniert mit dem aktiven Zustand des vorderen Auslösers (42) wirksam wird;
- wobei dieser Anfangsladebefehl (CDAI) ebenfalls als Befehlssignal der Eintrittsstufe (104v) des rückwärtigen Senders (54)zugeführt wird, um an die anderen Vorrichtungen weitergegeben zu werden;
(6) eine logische Stufe (220), die in Antwort auf diesen Ladebefehl (CDA) wirksam wird, um die in dem Speicher für Transitdaten (212) enthaltenen Daten in Form zu bringen und um diese anschließend auf reelle oder virtuelle Weise zum Speicher für erfasste Daten (256) weiterzuleiten;
(7) eine logische Stufe (222) für den Nachweis dieses Ladebefehls (CDA) und um diesen mit dem aktiven Zustand des rückwärtigen Auslösers (52) zu kombinieren, zu dessen Umwandlung in einen Bestätigungsbefehl des ausgeführten Austauschs (IVE), welcher als Befehl dem Generator von wahrnehmbaren Signalen (58-59) zugeführt wird, um das gelungene Ende des Vorgangs anzugeben.

## Claims

1. A data communication instrument (10) for direct communication between two individuals, adapted to be coupled to another instrument of the same type, comprising:
- a relatively rigid body having two main faces;
- a source of electrical power (20);
- a microcontroller (144) and memories;
- operating and management software;
- a pair of units that are respectively, a transmitter (14) and a receiver (16) of signals;
- a manual initiator (12);
- characterized in that, in order to allow an exchange of data by mutual copying;
- said signal transmitting and receiving units (14-16) are arranged on the same main face of said instrument (10), whereby a double link can be set up between two coupled instruments;
- the instrument (10) comprises a personal data memory (154) and an acquired data memory (156);
- said management software (146) comprises means for copying personal data from one instrument into the acquired data memory of the other.

2. The data communication instrument according to claim 1, characterized in that said management software includes means for determining the feasibility of the operation comprising:
- means (150-152) for determining volume occupied in said personal data memories and volume available in said acquired data memories;
- means (160) for producing a signal indicating feasibility of the operation when the volume available in said acquired data memories of the instruments is greater than the volume of memory occupied by the personal data to be copied;
- means (106, 107, 108) for triggering a mutual copying operation in response to said feasibility signal.

3. The data communication instrument according to claim 2 characterized in that:
- the memory (158) for the management software contains functional characteristics of the instrument;
- said means for determining feasibility of the operation additionally include:
- means (160) for determining the common level of compatibility between the functional characteristics of the two coupled instruments;
- means (161) for producing a general feasibility signal (SFG) including a communication protocol derived from said level of compatibility when, simultaneously, such a level exists and the volumes available in the acquired data memories are sufficient to allow the envisaged exchange of data;
- means (106, 107, 108) for triggering the mutual copying operation in response to this general feasibility signal (SFG).

4. The data communication instrument according to one of the preceding claims including at least one generator for a sound and/or luminous signal able to be sensed (24), the management software of which comprises:
- means (176) for commanding issuance of at least one sound and/or luminous signal able to be sensed, determined when an operation of exchange of data by mutual copying has been performed;
- means (162) for commanding issuance of a further determined signal able to be sensed when the operation has found not to be feasible.

5. The data communication instrument according to claim 4, adapted to perform an exchange of data between more than two individuals, characterized in that it comprises:
- on each main face, a manual initiator (42-52) and a pair of units for transmitting (44-54) and receiving (46-56) signals, said units being arranged so that, in a stack of instruments, a double link can be established between any pair of contiguous instruments;
- a memory for data in transit (212) associated with said acquired data memory (256);
- means (62) for setting the instrument to an operating state for a moment in response to manual actuating of at least one of said initiators (42-52);
- main faces, referred to respectively as the front and back face whereby, in an ordered stack of instruments, the front face that is accessible is that of the first instrument in the stack and the back face that is accessible is that of the last one, the initiator of the first instruments being adapted to initiate the operation of the means for determining feasibility of the operation.

6. The data communication instrument according to claim 4, adapted to carry out an exchange of data between more than two individuals, characterized in that it comprises:
- a manual initiator (42) and a pair of signal transmitting (44) and receiving (46) units on a main face and only a pair of identical transmitting (54) and receiving (56) units on the other face, said two pairs being arranged whereby in a stack of instruments, a double link can be set up between any pair of contiguous instruments;
- means (28) for setting the instrument to an operating state for a moment in response to a manual action on its initiator (42);
- a memory for data in transit (212) associated with said personal data memory (254);
- means (127-129) comprised in the management software (146) which intervene during a step preliminary to any other operation, to assign respectively first and last rank to the outer instruments (A-B) of said stack when the manual initiators (42) of said outer instruments (A-B) are accessible and set to the active state whereby the initiator of the first instrument can operate as an accessible front face initiator and, because of this, initiate means for starting the first step in the envisaged operation of data exchange and the initiator of the last instrument can operate as an accessible rear side initiator and because of this, intervene as such in said operation.

7. The data communication instrument according to one of claims 5 or 6, characterized in that:
- its personal data memory (254) contains general information notably relating to the place of the operation;
- its management software comprises:
- means for erasing the content of the acquired data memory (256) after the end of the operation;
- means for unconditionally rendering accessible the content of its personal data memories (254) and acquired data memories (256).

8. A data communication unit formed by a data communication instrument (10-40) according to one of claims 1 to 6 and a pocket microcomputer (260) adapted to constitute an operating device for this instrument, characterized in that:
- the memories (254 a, b, c) of said data communication instrument (10-40) comprise batches of data respectively identified by determined names;
- the management software (146) of this instrument comprises particular application programs (259) respectively identified by other determined names;
- the management software (288) of the microcomputer (260) comprises means (289, 291, 293, 295) for assigning one and/or the other of these particular application programs to one and/or the other of said batches of data in order to allow it or them to participate in the execution of particular functions (257) in relation with one or several other similar data communication instruments or with an external operating system, adapted for this purpose.

9. The data communication unit according to claim 8, characterized in that said instrument (10-40) being notably intended to be coupled to similar instruments,
- the data memories (254) of the instrument comprise batches of data classified into two categories: "Normally Available" and "Normally Confidential";
- the particular application programs (259) of the management software (146) of the instrument are temporary category change programs which comprise means for forbidding copying of batches of data classified "Normally Available" and means for authorizing copies of batches of data classified "Normally Confidential";
- the operating microcomputer management software (288) comprises means for assigning one and/or the other of these category change programs to one and/or the other of said batches of data.

10. A data communication instrument for directly communicating, according to one of claims 1 to 7, characterized in that it comprises:
- a transmission module (100) functionally arranged between a data memory (102) and the input stage (104) of a transmitter unit (14-44-46), this module comprising:
(1) a logic stage (106) operating in response to triggering signals (SDE or STS) for calling the data to be communicated;
(2) a logic stage (108) for producing formatted frames of the message to be transmitted and for applying them as a command signal to the input stage (104) of the transmitter unit;
- said message being a frame or a sequence of frames designed to travel on a communication bus, each frame having a given maximum length and comprising standardized header (114) and trailer (106) fields, a data field (118), a field (122) for identifying the nature of the message data and a flag field (124) giving the position of the frame in the message;
- a receiver module (126), functionally arranged between the output stage (140) of a receiver unit (16, 46, 56), reproducing the message transmitted by the transmission module (100) of a coupled instrument, and stages (142) for making use of this message, said receiver module comprising :
(1) a receive buffer memory (128) for storing at least for a moment the last frame of the message thus reproduced;
(2) a logic stage (136) for analysing the identification field (122) of the message cooperating with a routing stage (138) for consequently directing it to a determined stage where it will be used (142).

11. The data communication instrument for direct communication according to claim 10, characterized in that for reasons of communication security,
- said transmission module (100) produces messages the frames of which include a reception check field (120) and comprises:
(1) means (107, 108, 109) for retransmitting the last frame sent in response to a frame retransmission request (DRT);
(2) means (110) operative in response to a correct frame signal (STC) or incorrect frame signal (STI) for producing a formatted frame for transmission constituting a positive acknowledgement (MAP) or negative acknowledgement (MAN) message;
(3) means (111) for producing a frame retransmission request (DRT) should a positive or negative acknowledgement message not have been produced within a set timeout;
- said reception module (126) comprising:
(1) means (130) for calculating the check field of each frame of the received message;
(2) means (132) for comparing the identity of this calculated field with that of the check field effectively received and for producing consequently a correct (STC) or incorrect (STI) frame signal;
(3) means (134) operative in response to a correct frame signal (STC) for transmitting the relevant frame to the identification stage (136) and to the routing stage (138);
(4) means (131) for filtering the frames of data messages to be recopied and acknowledgement messages, whereby means (110) for producing a acknowledgement message only operate where the correct frame belongs to a data message to be recopied;
(5) means (143) for interpreting the acknowledgement messages and, for this effect, producing:
- in response to a positive acknowledgement message (MAP) a signal (STS) for commanding calling of the next frame, applied as a command to the data call stage (106) of the transmission module (100),
- in response to a negative acknowledgement message (MAN) , a frame retransmission request signal (DRT) applied as a command to the retransmission logic stage (109) of the retransmission module (100);
(6) a counter stage (133) adapted to be reset by next frame call signals (STS), for counting the number of successive frame retransmission command signals (DRT) and for producing a non-feasibility signal (SNF), applied as a command to the generator of the perceptible signal (24, 58, 59) where the count is above a determined threshold.

12. The data communication instrument for direct communication according to claims 4 and 10 designed to be coupled to a compatible tool for exchange of personal data, characterized in that:
- the transmission module (100), in response to an external triggering signal (SDE) constituted by a general feasibility signal (SFG), selects as a memory (102) for data to be transmitted, the available personal data memory (154b) and then operates in conformity with the common communication protocol defined by an item of data Cc included in this signal (SFG), and produces formatted frames of a data message to be recopied, applied as a command signal to the input stage (104) of the transmitter unit;
- in that the management software includes a processing module comprising:
(1) means for applying to said memory for data in transit (170) any message to be recopied, identified as such by the identification stage (136) of the reception module (126);
(2) a logic stage (172) for recognizing the end of the message received and for producing, consequently, a load instruction (CDA) for the acquired data memory (156);
(3) a logic stage (174), operating in response to this load instruction (CDA) for repackaging the formatted data contained in the memory for date in transit (170) and for then transferring them into the acquired memory (156), this transfer being real or virtual depending on whether the memories concerned are different as regards their location or qualification;
(4) a logic stage (176) for analyzing received messages in order to produce an end of reception signal (SFR) and for applying this signal as a command to the perceptible signal generator (24), in order to signal the operation has been successfully completed.

13. A data communication instrument for direct communication between several individuals, according to a combination of claims 5 or 6 and claim 10, characterized in that the means for verifying feasibility of a data exchange operation by multiple reciprocal copies between instruments previously set to an operating condition of a stack, comprising:
- first means implemented during a top-down test procedure including:
(1) a logic stage (200), operating in response to a top-down test trigger signal (DTD) for determining, and applying to a working memory (202): the rank (n) of the instrument in the stack calculated from the rank (n-1) of the preceding instrument, the volume P occupied in the personal data memory (254), the volume Q available in the acquired data memory (256), the data Cₙ of the functional characteristics memory (258) common to the instrument and to those preceding it, and the sum S₁ of the data P of the instrument and of the instruments arranged thereover;
(2) a logic stage (204) for producing either a top-down test continuance signal (PTD) when an item of data Cₙ is found, or a non-feasibility signal (SNF) applied as a command to the perceptible signal generator (58-59) when no common functional characteristic Cₙ appears between the instrument and those preceding it in the stack;
(3) the transmission module (100v) for calling the data n, Cₙ and S₁ contained in a working memory (202), for drawing up a top-down test message (MTD) incorporating these data as well as a top-down test triggering signal (DTD) and for applying it as a command to the input stage (104v) of the rear-side transmitter (54);
- the initial triggering signal for the top-down test (DTD1) being produced by the microcontroller (144) in response to the active state of the rear-side initiator (42) and the others (DTD), by a signal comprised in the top-down test message (MTD) detected by the reception module (126r) coupled to the output stage (140r) linked to a front-side receiver (46);
- second means implemented during a bottom-up test procedure including:
(1) a logic stage (208) operating in response to a bottom-up test triggering signal (DTM) and cooperating with said working memory (202);
- in order to calculate the sum S of data P relating to all the other instruments of the stack and to determine if the data Q of the instrument is greater than said sum S (Q > S ?),
- in order to determine, and apply to said working memory (202), the sum S₂ of the data P of the instrument and of the instruments arranged thereunder;
- in order to apply to said working memory (202) an item of data Cₘ identifying the optimum communication protocol applicable to all the instruments, said item of data Cₘ being, in the case of the last instrument in the stack, deduced from the functional characteristics that are common to all the instruments and, in the case of other instruments, transmitted simultaneously with the bottom-up test triggering signal (DTM),
- in order to produce an individual feasibility coded signal (SFI) if the condition Q > S proves true and, in the opposite case, in order to produce a non-feasibility coded signal (SNF), both applied as a command signal to at least one generator of a luminous signal (59 a,b);
- the initial bottom-up test triggering signal (DTM1) being produced by a logic stage (206) receiving a top-down test triggering signal (DTD) simultaneously with the active state of the rear-side initiator (52) and the other (DTM), via the reception module (126v) linked to the rear-side receiver (56);
(2) the transmission module (100r), operating in response to a triggering signal constituted by the individual feasibility signal (SFI), in order to call the date m S₂ and Cₘ contained in the working memory (202), in order to draw up a bottom-up test message (MTM) incorporation these data and a bottom-up test triggering signal (DTM), and for applying it as a command signal to the input stage (104r) of the front-side transmitting unit (44);
(3) the receive module (126v), associated with the front-side receive unit (56) for applying to said working memory (202) the data (m, Cₘ, S₂) communicated by the instruments arranged thereunder and for applying to the logic stage (208), the bottom-up test triggering signal (DTM), contained in the message (MTM) received;
(4) a logic stage (210) receiving from logic stage (208) an individual feasibility signal (SFI) simultaneously with the active state of the front-side initiator (42), in order to produce a general feasibility signal, constituting an initial instruction for top-down recopying (IRDI).

14. The data communication instrument for direct communication between several individuals, according to claim 13, characterized in that the means implemented during a general exchange of data comprise:
(1) two receive buffer memories (211r-211v) respectively arranged downstream of the receive modules (126r-126v);
(2) two logic switching stages (213v-213r) at two inputs and one output, one of said inputs being linked to an available data memory (254 b), the other being linked to one of said two one of said two receive buffer memories (211r-211v) and the output being linked to one of the two transmission modules (100v-100r);
- the stage (213) and the module (100) both operating in response to a recopy instruction (IRD or IRM) originating at a face of the receive instrument (211r-211v) and its output linked to one of the two transmission modules (100v-100r);
- each stage (213v-213r) and each module (100v-100r) operating in response to a recopy instruction (IRD or IRM) having its origin at a face of the instrument for calling the data contained in the personal data memory (254) of the instrument;
- each transmission module (100v-100r) then drawing up in agreement with the optimum communication protocol common to all the instruments, identified by the item of data Cₘ and said protocol being contained in a permanent memory (258) and said item of data Cₘ in said working memory (202), a message to be transmitted (MRD or MRM) containing these data and for applying this message to the input stage (104v-104r) of the transmitter unit (54-44) arranged on the other face;
(3) the receive module (126r-126b) of the receiver (56-46) of one face
- in order to detect the identification field (122) of the sequence of messages to be recopied transmitted by the instruments which precede it in the direction of recopying,
- in order to switch these messages, firstly, to the memory for data in transit (212) and, secondly, to the buffer memory (211r-211v) concerned, adapted to memorize successively each one of the message frames received, linked to one of the two inputs of the switching logic stage (213v-213r), arranged ahead of the transmission module (100v-100r) associated with the transmitting unit of the other face (54-44);
(4) a logic stage (214), linked firstly to the two receive modules (126r-126v) of the rear-side or front-side receivers (56-46) and, secondly, to said working memory (202) containing the data (m, n) for instrument rank;
- in order to determine, and store for a moment, the number of messages to be received during a top-down or bottom-up recopying procedure, starting from the number (n-1) or (m-n) of instruments respectively arranged above and then below it,
- in order to detect the end of the last message of the sequence of messages to be recopied received, and for producing, in consequence, for the transmission (100), said top-down recopy instruction (IRD) or said bottom-up recopy instruction (IRM),
- the initial top-down recopy instruction (IRD1) being said general feasibility signal (SFG) and the initial bottom-up recopy instruction (IRM1) being a top-down recopy instruction combined in a logic stage (216) with the active status of the rear-side initiator (52);
- the top-down and bottom-up recopy instructions (IRD-IRM) being respectively applied to the switching logic stages (213v-213r) and to the two transmission modules (100v-100r);
(5) a logic stage (218) for producing an initial load instruction (CDA1) for the acquired data memory (256), operating in response to a bottom-up recopy instruction (IRM), supplied by the detection logic stage (214), combined with the active status of the front-side initiator (42);
- said initial load instruction (CDA1) being also applied as a command signal to the input stage (104v) of the rear-side transmitter unit (54) in order to be relayed to other instruments;
(6) a logic stage (220) operating in response to said load instruction (CDA) for repackaging the data contained in the memory for data in transit (212) and for then transferring them in a real or virtual manner into said acquired data memory (256);
(7) a logic stage (222) for detecting said load instruction (CDA) and for combining it with the active status of the rear-side initiator (52) in order to transform it into an enable instruction for the exchange (IVE) carried out, applied as a command to the signal generator (58, 59) of a signal able to be sensed, in order to indicate the operation has been successfully performed.
